(19) Europäisches Patentamt / European Patent Office / Office européen des brevets

(11) **EP 3 894 817 B1**

(12) # EUROPÄISCHE PATENTSCHRIFT

(45) Veröffentlichungstag und Bekanntmachung des Hinweises auf die Patenterteilung:
**09.10.2024 Patentblatt 2024/41**

(21) Anmeldenummer: **19832032.7**

(22) Anmeldetag: **16.12.2019**

(51) Internationale Patentklassifikation (IPC):
***G01L 3/10*** *(2006.01)*

(52) Gemeinsame Patentklassifikation (CPC):
**G01L 3/105; G01L 3/102**

(86) Internationale Anmeldenummer:
**PCT/EP2019/085298**

(87) Internationale Veröffentlichungsnummer:
**WO 2020/120795 (18.06.2020 Gazette 2020/25)**

(54) **SENSORVORRICHTUNG UND VERFAHREN ZUR BESTIMMUNG EINES DREHMOMENTS EINER DREHMOMENT-ÜBERTRAGUNGSEINRICHTUNG**

SENSOR DEVICE AND METHOD FOR DETERMINING A TORQUE OF A TORQUE TRANSMISSION APPARATUS

DISPOSITIF DE DÉTECTION ET PROCÉDÉ POUR DÉTERMINER UN COUPLE DE ROTATION D'UN DISPOSITIF DE TRANSMISSION DE COUPLE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2018 DE 102018009834**

(43) Veröffentlichungstag der Anmeldung:
**20.10.2021 Patentblatt 2021/42**

(73) Patentinhaber: **Karlsruher Institut für Technologie 76131 Karlsruhe (DE)**

(72) Erfinder:
• **SEEMANN, Klaus**
**76448 Durmersheim (DE)**
• **LEISTE, Harald**
**76356 Weingarten (DE)**
• **BEIRLE, Stefan**
**73340 Amstetten (DE)**

(74) Vertreter: **Müller-Boré & Partner Patentanwälte PartG mbB Friedenheimer Brücke 21 80639 München (DE)**

(56) Entgegenhaltungen:
**WO-A1-2013/147268    FR-A1- 2 700 846
US-A1- 2007 034 022**

• **KATHRIN KRÜGER ET AL: "High-frequency magnetoelastic measurements on Fe-Co-Hf-N/Ti-N multilayer coatings", JOURNAL OF MAGNETISM AND MAGNETIC MATERIALS, vol. 343, 31 October 2013 (2013-10-31), pages 42 - 48, XP055678900**

**Beschreibung**

Die Erfindung betrifft eine Sensorvorrichtung und ein Verfahren zur Bestimmung eines Drehmomentes einer Drehmoment-Übertragungseinrichtung, insbesondere einer belasteten Welle.

Die Erfindung liegt auf dem Gebiet des Maschinenbaus (beispielsweise Fahrzeugtechnik, Luft- und Raumfahrttechnik), insbesondere auf dem Gebiet der Messtechnik zur Bestimmung von Drehmomenten. Insbesondere sind drehende Teile, welche einer Wechsellast unterworfen sind, schlecht oder nicht direkt elektrisch konktaktierbar, wodurch eine berührungslose Messung deren Drehmomente in Echtzeit erfolgen muss.

Berthold et al. ("Non-contact strain measurements based on inverse magnetostriction", Sensors and Actuators A 158 (2010) 224-230) beschreibt eine Messtechnik zu Messung magnetostriktiver Reaktionen basierend auf einem Frequenzmischungsverfahren. Hierzu wird ein Magnetfeld mit zwei Frequenzen verwendet, wobei ein Vorhandensein eines magnetischen Materials neue Spitzenwerte des FFT-Spektrums des Messsignals erzeugt, welche für die nichtlineare Magnetisierungskurve spezifisch sind. Da die Magnetisierungskurve durch mechanische Spannung verändert werden kann, können die Amplituden der Spitzenwerte eine charakteristische Abhängigkeit von einem Maß der Spannung des Materials zeigen. Die Inhalte von Berthold et al. ("Non-contact strain measurements based on inverse magnetostriction", Sensors and Actuators A 158 (2010) 224-230) sind hiermit in vollständiger Form als Bestandteil der Beschreibung aufgenommen.

US 2014/159710 A1 beschreibt eine kontaktlose Erfassungsvorrichtung, umfassend einen ersten Magnetring, einen zweiten Magnetring, einen ersten Magnetsensor, einen zweiten Magnetsensor und eine Steuerung. Die zwei Magnetringe sind jeweils an zwei Enden einer Torsionswelle angebracht. Wenn sich die Torsionswelle dreht, erfasst die Steuerung die Magnetfelder der zwei Magnetringe durch die zwei Magnetsensoren. Die Steuerung berechnet basierend auf den erfassten Magnetfeldern gleichzeitig ein Verdrehungsdrehmoment, das auf die Torsionswelle ausgeübt wird, und einen Drehwinkel der Torsionswelle. Die Inhalte von US 2014/159710 A1 sind hiermit in vollständiger Form als Bestandteil der Beschreibung aufgenommen.

WO 2016/162028 A1 beschreibt eine Anordnung und ein Verfahren zum berührungslosen Messen eines Momentes an einem sich in einer Achse erstreckenden Maschinenelement unter Nutzung des invers-magnetostriktiven Effektes. Das Maschinenelement weist eine Permanentmagnetisierung auf, die zumindest innerhalb eines axialen Abschnittes des Maschinenelementes ausgebildet ist und parallel zu einer radial ausgerichteten Geraden ausgerichtet ist. Die Permanentmagnetisierung besitzt bevorzugt genau zwei Pole, die bezogen auf die Achse diametral gegenüberliegend angeordnet sind. Die Anordnung umfasst weiterhin mindestens einen Magnetfeldsensor, welcher zumindest zur Messung einer axialen Richtungskomponente eines durch die Permanentmagnetisierung sowie durch das Moment bewirkten Magnetfeldes oder einer axialen Richtungskomponente einer durch die Permanentmagnetisierung sowie durch das Moment bewirkten Magnetfeldänderung ausgebildet ist. Die Inhalte von WO 2016/162028 A1 sind hiermit in vollständiger Form als Bestandteil der Beschreibung aufgenommen.

FR 2 700 846 A1 beschreibt eine Vorrichtung zum Messen von Spannungen oder mechanischen Verformungen in einem Umfeld umfassend: mindestens einen magnetoelastischen Sensor mit einer ferromagnetischen Resonanzfrequenz in Abhängigkeit von den auf den Sensor ausgeübten Spannungen, der in das Umfeld eingeführt wird, wo die Spannungen gemessen werden sollen; Mittel zur magnetischen Sättigung des Sensors zur Herstellung ferromagnetischer Resonanz; und Mittel zum Koppeln des Sensors mit einem Mikrowellen-Frequenzanalysator zur Erfassung der ferromagnetischen Resonanzfrequenz des Sensors in Abhängigkeit von den im Umfeld herrschenden Spannungen.

Kathrin Krüger et al.: "High-frequency magnetoelastic measurements of Fe-Co-Hf-N/Ti-N multiplayer coatings" (JOURNAL OF MAGNETISM AND MAGNETIC MATERIALS, Bd. 343, 31. Oktober 2013, Seiten 42 - 48, XP055678900) beschreibt Untersuchungen zu dünnen viellagigen $Fe_{32}Co_{44}Hf_{12}N_{12}/Ti_{50}N_{50}$ Beschichtungen als verschleißfeste Beschichtungen mit integrierter Sensorfunktion zur Bestimmung von externen mechanischen Spannungen, z.B. Druckspannungen und/oder Zugspannungen. Ein Aufbau wurde entworfen, um Veränderungen zu überwachen in der Frequenzabhängigen Permeabilität aufgrund von mechanisch induzierten Spannungen in den ferromagnetischen $Fe_{32}Co_{44}Hf_{12}N_{12}$ Einzellagen. Hierdurch wird die Abhängigkeit der Grenzfrequenz von externen mechanischen Spannungen theoretisch beschrieben.

WO 2013/147268 A1 beschreibt eine Übertragungsleitung. Die Übertragungsleitung umfasst Leiterschichten (A) mit positiver magnetischer Permeabilität und Leiterschichten (B) mit negativer magnetischer Permeabilität. Die Dicken der Schichten A und B sind so eingestellt, dass magnetische Flüsse benachbarter Schichten verringert (ausgelöscht) werden. Da die magnetische Flussdichte in Übereinstimmung mit Abständen von der Mitte so verteilt ist, dass die Dichte zur Mitte hin geringer und zur Außenseite hin höher wird, kann der Auslöschungseffekt verbessert werden, indem die Dicken der Schichten zur Mitte hin dicker und zur Außenseite hin dünner eingestellt werden. Eine Leiterplatte ist mit einem Substrat und einer Übertragungsleitung ausgestattet, die auf der oberen Oberfläche des Substrats vorgesehen ist, wobei die oben erwähnte Übertragungsleitung für diese Übertragungsleitung verwendet wird. Ferner ist ein Hochfrequenzgerät mit einer Übertragungsleitung ausgestattet, wobei die zuvor erwähnte Übertragungsleitung für diese Übertragungsleitung verwendet wird.

US 2007/034022 A1 beschreibt einen magnetoelastischen Drehmomentsensor und ein System umfassend ein Substrat und eine magnetoelastische Erfassungskomponente, die aus oder auf dem Substrat gebildet ist. Die magnetoelastische Erfassungskomponente und das Substrat bilden zusammen einen magnetoelastischen Drehmomentsensor, der, wenn er einer mit einem Drehmoment verbundenen Belastung ausgesetzt wird, eine charakteristische Frequenz davon linear in Reaktion auf das Drehmoment verschiebt. Hierdurch wird ein Weg induziert, durch den magnetoelastische Energie gekoppelt wird, um Schwingungen in einer Basisebene des magnetoelastischen Sensors anzuregen, wodurch drehmomentbasierte Informationen basierend auf einer Resonanzfrequenz davon erzeugt werden.

Es ist daher eine Aufgabe der Erfindung, eine Sensorvorrichtung und ein Verfahren zur Bestimmung eines Drehmomentes einer Drehmoment-Übertragungseinrichtung mit einer erhöhten Effizienz und einer verbesserten Zuverlässigkeit der gemessenen Werte bereitzustellen.

Die Aufgabe wird durch eine Sensorvorrichtung und ein Verfahren zur Bestimmung eines Drehmomentes einer Drehmoment-Übertragungseinrichtung gemäß jeweils den unabhängigen Ansprüchen gelöst. Die beanspruchte Erfindung ist durch die Sensorvorrichtung nach Anspruch 1 und durch das Verfahren zur Bestimmung eines Drehmoments einer Drehmoment-Übertragungseinrichtung nach Anspruch 11 definiert. Bevorzugte Ausführungsformen bilden den Gegenstand der abhängigen Ansprüche.

Ein Aspekt betrifft eine Sensorvorrichtung, umfassend mindestens ein ferromagnetisches Element, welches in einem Betriebszustand an einer Drehmoment-Übertragungseinrichtung, insbesondere einer Antriebswelle, anordenbar ist, und eine Messeinrichtung, umfassend mindestens ein Messelement, insbesondere mindestens ein Messkopf, wobei jedes Messelement ausgelegt ist, eine ferromagnetische Resonanzfrequenz zumindest eines ferromagnetischen Elements zu messen, wobei die Messeinrichtung ausgelegt ist, ein Drehmoment der Drehmoment-Übertragungseinrichtung basierend auf der gemessenen ferromagnetischen Resonanzfrequenz und/oder einer Verschiebung der gemessenen ferromagnetischen Resonanzfrequenz zu bestimmen.

Hierbei ist im Rahmen der Erfindung insbesondere erkannt worden, dass gerade basierend auf der gemessenen ferromagnetischen Resonanzfrequenz bzw. der Verschiebung der gemessenen Resonanzfrequenz ein besonders effizientes und kostengünstiges Verfahren zur Bestimmung des angelegten Drehmoments, welches mittels erzeugter Torsionskräfte ein magnetisches Anisotropiefeld des mindestens einen ferromagnetischen Elements verändert, möglich ist.

Der Betriebszustand ist im Rahmen dieser Beschreibung als der Zustand zu verstehen, in dem das mindestens eine ferromagnetische Element an der Drehmoment-Übertragungseinrichtung angeordnet ist und in dem das mindestens eine Messelement derart angeordnet ist, um die ferromagnetische Resonanzfrequenz zumindest eines ferromagnetischen Elements zu messen.

Das mindestens eine ferromagnetische Element kann hierbei insbesondere mindestens ein ferromagnetisches Material umfassen, wobei das mindestens eine ferromagnetische Element bevorzugt als mindestens ein weichmagnetisches ferromagnetisches Element ausgebildet ist. Weichmagnetisch ist in diesem Sinne derart zu verstehen, dass das mindestens eine weichmagnetische ferromagnetische Element eine Koerzitivfeldstärke von weniger als 1200A/m, bevorzugt weniger 1000A/m und/oder vom mehr als 0A/m, bevorzugt mehr als 300 A/m aufweist. Hierdurch können Hochfrequenzverluste basierend auf Präzessionsdämpfungen der magnetischen Momente minimiert werden, und somit eine zuverlässige Messung der ferromagnetischen Resonanzfrequenz gewährleistet werden.

Hierbei kann insbesondere ein weichmagnetisches ferromagnetisches Element mit einer Koerzitivfeldstärke, welche kleiner als eine Anisotropiefeldstärke bzw. eine uniaxiale Anisotropiefeldstärke des magnetischen Anisotropiefeldes ist, gewählt werden. Hierbei kann die Koerzitivfeldstärke einen Wert von vorzugsweise maximal 2/3 der Anisotropiefeldstärke, weiter bevorzugt maximal 1/3 der Anisotropiefeldstärke und/oder einen Wert von vorzugsweise mindestens 1/5 der Anisotropiefeldstärke, weiter bevorzugt mindestens 1/4 der Anisotropiefeldstärke aufweisen. Somit kann das mindestens eine weichmagnetische ferromagnetische Element bei einer Anisotropiefeldstärke von beispielsweise 3000 A/m mit einer Koerzitivfeldstärke von kleiner als 1000 A/m gewählt werden.

Das mindestens eine ferromagnetische Element kann insbesondere als mindestens ein ferromagnetisches magnetostriktives Element ausgebildet sein. Hierbei können magnetostriktive Materialien auf eine angelegte mechanische Spannung, insbesondere gemäß dem Villari-Effekt, durch eine Veränderung ihrer Magnetisierung reagieren.

Ferner können insbesondere mindestens ein Permanentmagnet und/oder mindestens ein Elektromagnet in das mindestens eine ferromagnetische Element integriert werden. Ferner können insbesondere mindestens ein Permanentmagnet und/oder mindestens ein Elektromagnet in die Drehmoment-Übertragungseinrichtung integriert werden. Insbesondere durch die Integration von mindestens einem Permanentmagnet in der Drehmoment-Übertragungseinrichtung kann eine Stromversorgungseinrichtung in der Drehmoment-Übertragungseinrichtung vermieden werden. Hierdurch kann eine Anisotropie des mindestens einen ferromagnetischen Elements stabilisiert und/oder eine Messfrequenz der Messeinrichtung variiert werden.

Das mindestens eine ferromagnetische Element kann hierbei ferner insbesondere derart an der Drehmoment-Übertragungseinrichtung angeordnet sein, dass eine Unwucht der Drehmoment-Übertragungseinrichtung vermieden wird. In anderen Worten kann das mindestens eine ferromagnetische Element derart an der Drehmoment-Übertragungseinrichtung angeordnet werden, dass eine Drehachse der Drehmoment-Übertragungseinrichtung vor der Anordnung des mindestens einen ferromagnetischen Elements an der Drehmoment-Übertragungseinrichtung im Wesentlichen einer Drehachse der Drehmoment-Übertragungseinrichtung nach der Anordnung des mindestens einen ferromagnetischen Elements an der Drehmoment-Übertragungseinrichtung entspricht. Ferner kann das mindestens eine ferromagnetische Element zumindest teilweise im Wesentlichen achsensymmetrisch bezüglich der Drehachse der Drehmoment-Übertragungseinrichtung angeordnet sein. Hierdurch wird eine stabile Lage einer Drehachse der Drehmoment-Übertragungseinrichtung ermöglicht.

Die Messeinrichtung umfasst mindestens ein Messelement, wobei jedes Messelement ausgelegt ist, eine ferromagnetische Resonanzfrequenz zumindest eines ferromagnetischen Elements zu messen, wobei die Messeinrichtung ausgelegt ist, ein Drehmoment der Drehmoment-Übertragungseinrichtung basierend auf einer Verschiebung der gemessenen ferromagnetischen Resonanzfrequenz zu bestimmen. Hierbei kann die Messeinrichtung und/oder das mindestens eine Messelement beispielsweise ausgelegt sein, Stripline-basierte ferromagnetische Resonanz (FMR) Messtechniken und/oder Vector Network Analyzer (VNA) FMR-Messtechniken und/oder gepulste induktive Mikrowellen-Magnetrometrie ("pulsed inductive microwave magnetometry", PIMM) FMR-Messtechniken auszuführen.

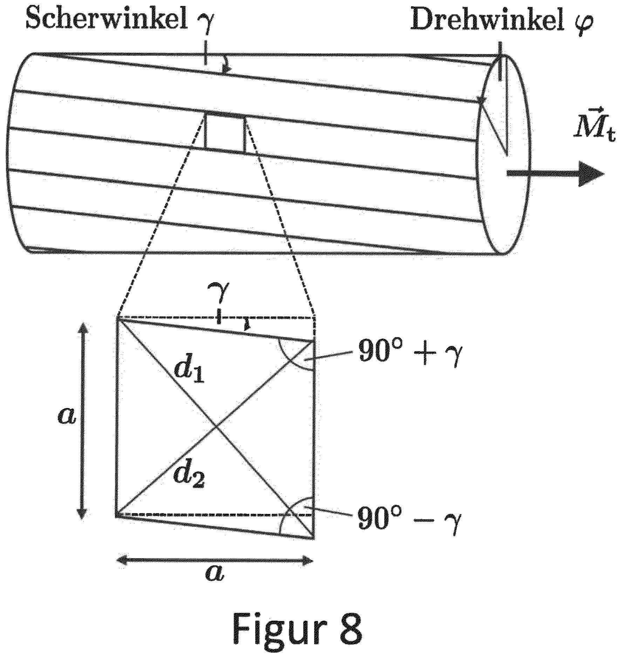

Der theoretische Hintergrund bezüglich der Bestimmung des Drehmoments der Drehmoment-Übertragungseinrichtung basierend auf einer Verschiebung der gemessenen ferromagnetischen Resonanzfrequenz wird hierbei exemplarisch anhand eines quadratischen ferromagnetischen Elements erläutert, wobei das quadratische ferromagnetische Element an einer exemplarischen zylindrischen Welle angeordnet ist. Hierzu wird insbesondere auf Figur 8 verwiesen, welche die unten verwendeten Größen exemplarisch darstellt. Das quadratische ferromagnetische Element hat eine Seitenlänge a. Eine Rotation der Welle um deren Achse um einen Winkel $\varphi$ bewirkt eine Deformation der Welle, wodurch das quadratische ferromagnetische Element um einen Scherwinkel $\gamma$ geschert wird. Hierdurch wird eine erste Diagonale $d_1$ des quadratischen ferromagnetischen Elements gestreckt, während eine zweite Diagonale $d_2$ gestaucht wird:

$$d_1 = a \sqrt{1 + \frac{1}{\cos^2(\gamma)} + 2\tan(\gamma)} \qquad (1)$$

$$d_2 = a \sqrt{1 + \frac{1}{\cos^2(\gamma)} - 2\tan(\gamma)} \qquad (2)$$

Hierdurch ergibt sich eine entsprechende Verformung:

$$\varepsilon_1 = \frac{d_1 - a\sqrt{2}}{a\sqrt{2}} = \sqrt{\frac{1}{2} + \frac{1}{2\cos^2(\gamma)} + \tan(\gamma)} - 1 \qquad (3)$$

$$\varepsilon_2 = \frac{d_2 - a\sqrt{2}}{a\sqrt{2}} = \sqrt{\frac{1}{2} + \frac{1}{2\cos^2(\gamma)} - \tan(\gamma)} - 1 \qquad (4)$$

Ferner kann der Schwerwinkel $\gamma$ basierend auf dem Winkel $\varphi$, dem Radius der Welle $r$ und der Länge der Welle $L$ bestimmt werden:

$$\gamma = \frac{r}{L}\varphi \qquad (5)$$

Der Winkel $\varphi$ ergibt sich hierbei aus dem Drehmoment $M_t$, der Länge der Welle $L$, dem Schubmodul $G$ und dem Trägheitsmoment $J$:

$$\varphi = \frac{M_t L}{GJ} \qquad (6)$$

Hierbei kann das Trägheitsmoment $J$ ausgedrückt werden durch:

$$J = \frac{1}{2}\pi r^4 \qquad (7)$$

Setzt man Gleichungen (6) und (7) in Gleichung (5) ein, erhält man für den Scherwinkel $\gamma$:

$$\gamma = \frac{2M_t}{\pi G r^3} \qquad (8)$$

Gemäß dem Hookeschen Gesetz und Gleichungen (3), (4) und (8) ergibt sich hierbei die folgende Formel für die mechanische Spannung $\sigma$ an der Oberfläche des quadratischen ferromagnetischen Elements entlang einer der Diagonalen $d_i$:

$$\sigma = E\varepsilon_i = E_r(1 - v^2)\varepsilon_i \qquad (9)$$

Die Dynamik eines dünnen ferromagnetischen Films mit einer uniaxialen Anisotropie in der Ebene des Films, wobei der Film einem Hochfrequenzfeld ausgesetzt ist, wird durch die Landau-Lifschitz-Gilbert Formel beschrieben. Insbesondere ergibt sich hierbei die bekannte Kittel Formel für die ferromagnetische Resonanzfrequenz:

$$f_g = \frac{\tilde{\gamma}}{2\pi}\sqrt{(\mu_0 H_u)^2 + J_s \mu_0 H_u} \qquad (10)$$

Hierbei ist $\tilde{\gamma}$ die gyromagnetische Konstante, $\mu_0$ ist die magnetische Feldkonstante, $Js$ ist die Sättigungspolarisation und $H_u$ ist der Betrag des uniaxialen Anisotropiefeldes in der Ebene des Films.

Unter Belastung des quadratischen ferromagnetischen Films, insbesondere durch eine Spannung, welche durch ein an die Welle angelegtes Drehmoment erzeugt wird, wird die ferromagnetische Resonanzfrequenz abhängig von der besagten Spannung. Hierbei ist insbesondere zusätzlich zu dem uniaxialen Anisotropiefeld $\vec{H}_u$ in der Ebene des Films ein durch die Spannung erzeugtes effektives magnetoelastisches Anisotropiefeld $\vec{H}_{me}$ zu berücksichtigen:

$$\vec{H}_{u,eff} = \vec{H}_u + \vec{H}_{me} = \begin{pmatrix} 0 \\ H_u \\ 0 \end{pmatrix} + \begin{pmatrix} \frac{3\lambda_S}{J_S}\sigma \\ -\frac{3\lambda_S}{J_S}\sigma \\ 0 \end{pmatrix} = \begin{pmatrix} \frac{3\lambda_S}{J_S}\sigma \\ H_u - \frac{3\lambda_S}{J_S}\sigma \\ 0 \end{pmatrix} \qquad (11)$$

Hierbei ist $\vec{H}_{u,eff}$ das effektive bi-axiale Anisotropiefeld in der Ebene des Films und $\lambda_S$ die Sättigungs-magnetostriktive Konstante. Somit ergibt sich basierend auf Gleichung (11):

$$H_{u,eff} = \sqrt{\left[\frac{3\lambda_S}{J_S}\sigma\right]^2 + \left[H_u - \frac{3\lambda_S}{J_S}\sigma\right]^2} \qquad (12)$$

Setzt man nun $H_{u,eff}$ für $H_u$ in Gleichung (10) ein, erhält man die Spannungs-abhängige ferromagnetische

Resonanzfrequenz:

$$f_g = \frac{\tilde{\gamma}}{2\pi}\sqrt{\left(\mu_0 H_{u,eff}\right)^2 + J_S \mu_0 H_{u,eff}} \qquad (13)$$

Somit ist es möglich, das an die Welle bzw. die Drehmoment-Übertragungseinrichtung angelegte Drehmoment basierend auf einer Messung der ferromagnetischen Resonanzfrequenz bzw. auf einer Messung einer Verschiebung der ferromagnetischen Resonanzfrequenz zu bestimmen. Insbesondere wird hierbei ermöglicht, das angelegte Drehmoment mit einer einzigen Signalleitung und in Echtzeit zu bestimmen. Hierbei kann insbesondere eine ausgeprägte ferromagnetische Resonanz (FMR), d.h. ein Resonanzpeak mit einer kleinen Halbwertsbreite $\Delta f_{FMR}$ zwischen 1/5 und 1/10 der FMR ein besseres Auflösungsvermögen des Messsignals und damit ein günstigeres Signal-Rausch-Verhältnis ermöglichen. Eine Messfrequenz einer Ausleseelektronik der Sensorvorrichtung und/oder der Messeinrichtung und/oder des mindestens einen Messelements bzw. eine für eine Industrie (insbesondere gesetzlich) festgelegte Frequenz definieren die zu verwendende bzw. durch die Sensorvorrichtung und/oder das mindestens eine ferromagnetische Element individuell anzupassende ferromagnetische Resonanzfrequenz. Somit kann insbesondere die Sensorvorrichtung anwendungsabhängig angepasst werden.

Insbesondere kann bei kleinen Frequenzen $f$ außerhalb der ferromagnetischen Resonanzfrequenz eine Verschiebung einer Anfangspermeabilität bzw. ursprünglichen Permeabilität des mindestens einen ferromagnetischen Elements zu höheren oder zu tieferen Werten gemessen werden $\left(\mu(f \to 0) \approx 1 + \dfrac{J_S}{\mu_0 \cdot H_u}\right)$. Hierdurch kann insbesondere die Datenaufnahme effizienter und/oder flexibler gestaltet werden. Insbesondere ist auch bei kleiner Messfrequenz ($f \to 0$) der Streuparameter $S_{11}$ ebenfalls abhängig von der effektiven uniaxialen Anisotropie, die wiederrum eine Funktion der mechanischen Spannung ist. Hierdurch kann zusätzlich eine Bestimmung des Drehmomentes einer Drehmoment-Übertragungseinrichtung aus einer Messung der Anfangspermeabilität (Permeabilität bei ($f \to 0$)) bzw. des Streuparameters $S_{11}$ für ($f \to 0$) erfolgen.

Insbesondere kann das mindestens eine Messelement ausgelegt sein, die ferromagnetische Resonanzfrequenz des mindestens einen ferromagnetischen Elements mittels eines Frequenzsweeps zu messen bzw. zu ermitteln. Hierbei kann insbesondere ein Parameterverlauf eines physikalischen Parameters, beispielsweise des Streuparameters $S_{11}$, über ein Frequenzintervall der Messfrequenz ermittelt werden, wobei die Messfrequenz zwischen einem unteren Schwellenwert des Frequenzintervalls und einem oberen Schwellenwert des Frequenzintervalls variiert wird. Die ferromagnetische Resonanzfrequenz kann hierbei beispielsweise durch das Minimum des Parameterverlaufs des Streuparameters $S_{11}$ bzw. durch einen Imaginärteil (Lorentz-kurvenförmigen Resonanzpeakverlauf) der frequenzabhängigen Permeabilität bestimmt werden, welche anhand der $S_{11}$ Daten berechnet bzw. ausgewertet werden kann.

Insbesondere kann das mindestens eine ferromagnetische Element mindestens eine ferromagnetische Schicht aufweisen. Die ferromagnetische Schicht kann hierbei insbesondere in dem Betriebszustand parallel zu einer Oberfläche der Drehmoment-Übertragungseinrichtung ausgebildet sein. Alternativ oder zusätzlich kann die mindestens eine ferromagnetische Schicht im Wesentlichen eben ausgebildet sein. Im Wesentlichen ist im Rahmen dieser Beschreibung als umfassend geringer herstellungs- und umweltbedingter Abweichungen zu verstehen.

Insbesondere kann das mindestens eine ferromagnetische Element zwei oder mehr ferromagnetische Schichten aufweisen, wobei insbesondere eine Vielzahl, bevorzugt jede, der zwei oder mehr ferromagnetischen Schichten aus jeweils einem anderen ferromagnetischen Material ausgebildet sein kann als die anderen der zwei oder mehr ferromagnetischen Schichten.

Insbesondere kann das mindestens eine ferromagnetische Element zwei oder mehr ferromagnetische Schichten und mindestens eine isolierende, nichtleitende Trennschicht aufweisen, wobei jeweils mindestens eine der mindestens einen isolierenden, nichtleitenden Trennschichten zwischen zwei benachbarten ferromagnetischen Schichten der zwei oder mehr ferromagnetischen Schichten angeordnet ist. Jede der mindestens einen isolierenden, nichtleitenden Trennschicht kann hierbei insbesondere ausgelegt sein, um die jeweiligen zwei benachbarten ferromagnetischen Schichten der zwei oder mehr ferromagnetischen Schichten magnetisch voneinander zu entkoppeln bzw. eine magnetische Wechselwirkung zwischen den jeweiligen benachbarten ferromagnetischen Schichten zu verhindern bzw. zu reduzieren. Hierbei kann die mindestens eine isolierende, nichtleitende Trennschicht beispielsweise aus einem nichtleitenden oder schlecht leitenden Material ausgebildet sein, so dass die jeweiligen zwei benachbarten ferromagnetischen Schichten der zwei oder mehr ferromagnetischen Schichten magnetisch im Wesentlichen voneinander entkoppelt sind bzw. eine magnetische Wechselwirkung zwischen den jeweiligen benachbarten ferromagnetischen Schichten verhindert bzw. reduziert ist.

Insbesondere können die zwei oder mehr ferromagnetischen Schichten mindestens eine erste ferromagnetische Schicht und eine zweite ferromagnetische Schicht aufweisen. Die erste ferromagnetische Schicht kann hierbei insbesondere aus mindestens einem ersten ferromagnetischen Material und die zweite ferromagnetische Schicht aus mindestens einem zweiten ferromagnetischen Material ausgebildet sein. Ferner kann die erste ferromagnetische Schicht durch mindestens eine isolierende, nichtleitende Trennschicht, wie oben beschrieben, von der zweiten ferromagnetischen Schicht getrennt sein. Mit anderen Worten kann das mindestens eine ferromagnetische Element mindestens eine isolierende, nichtleitende Trennschicht aufweisen, welche zwischen der ersten ferromagnetischen Schicht und der zweiten ferromagnetischen Schicht angeordnet ist. Die mindestens eine isolierende, nichtleitende Trennschicht kann hierbei insbesondere ausgelegt sein, um die erste ferromagnetische Schicht und die zweite ferromagnetische Schicht magnetisch voneinander zu entkoppeln bzw. eine magnetische Wechselwirkung zwischen diesen ferromagnetischen Schichten zu verhindern bzw. zu reduzieren.

Insbesondere können die erste ferromagnetische Schicht, welche aus mindestens dem ersten ferromagnetischen Material ausgebildet ist, und die zweite ferromagnetische Schicht, welche aus mindestens dem zweiten ferromagnetischen Material ausgebildet ist, unterschiedliche ferromagnetische Resonanzfrequenzen aufweisen. Insbesondere kann das mindestens eine Messelement ausgelegt sein, für jede der zwei oder mehr ferromagnetischen Schichten eine jeweilige ferromagnetische Resonanzfrequenz zu messen bzw. zu ermitteln. Hierbei kann das mindestens eine Messelement insbesondere ausgelegt sein, eine erste ferromagnetische Resonanzfrequenz der ersten ferromagnetischen Schicht und eine zweite ferromagnetische Resonanzfrequenz der zweiten ferromagnetischen Schicht des mindestens einen ferromagnetischen Elements zu messen bzw. zu ermitteln. Beispielsweise können somit bei einer Messung der frequenzabhängigen Permeabilität des mindestens einen ferromagnetischen Elements mittels des mindestens einen Messelements zwei Resonanzmaxima beobachtet werden.

Insbesondere kann die Messeinrichtung ausgelegt sein, ein Drehmoment der Drehmoment-Übertragungseinrichtung basierend auf einer Verschiebung mindestens einer der für jede der zwei oder mehr ferromagnetischen Schichten gemessenen ferromagnetischen Resonanzfrequenzen zu bestimmen. Insbesondere kann die Messeinrichtung ausgelegt sein, ein Drehmoment der Drehmoment-Übertragungseinrichtung basierend auf einer Verschiebung der gemessenen ersten ferromagnetischen Resonanzfrequenz und/oder der gemessenen zweiten ferromagnetischen Resonanzfrequenz zu bestimmen. Insbesondere kann die Messeinrichtung ausgelegt sein, für jede der zwei oder mehr ferromagnetischen Schichten ein jeweiliges Drehmoment der Drehmoment-Übertragungseinrichtung basierend auf einer Verschiebung der jeweilig gemessenen ferromagnetischen Resonanzfrequenz zu bestimmen. Beispielsweise kann die Messeinrichtung ausgelegt sein, ein erstes Drehmoment der Drehmoment-Übertragungseinrichtung basierend auf einer Verschiebung der gemessenen ersten ferromagnetischen Resonanzfrequenz zu bestimmen, und ein zweites Drehmoment der Drehmoment-Übertragungseinrichtung basierend auf einer Verschiebung der gemessenen zweiten ferromagnetischen Resonanzfrequenz zu bestimmen. Die Messeinrichtung kann hierbei ferner ausgelegt sein, das Drehmoment der Drehmoment-Übertragungseinrichtung basierend auf einem arithmetischen Mittel aus dem ersten Drehmoment und dem zweiten Drehmoment zu bestimmen, wobei die Messeinrichtung jedoch nicht auf eine derartige Bestimmung des Drehmoments beschränkt ist. Insbesondere kann die Messeinrichtung jeglichen Algorithmus zur Bestimmung des Drehmoments basierend auf einer Verschiebung mindestens einer der für jede der zwei oder mehr ferromagnetischen Schichten gemessenen ferromagnetischen Resonanzfrequenzen anwenden. Beispielsweise, kann ein arithmetisches Mittel oder gewichteter Mittelwert der jeweils ermittelten Drehmomente für jede der zwei oder mehr ferromagnetischen Schichten bestimmt werden. Alternativ oder zusätzlich kann die Messeinrichtung ausgelegt sein, jeglichen Algorithmus zur Bestimmung des Drehmoments basierend auf einer Verschiebung mindestens einer Teilmenge der für jede der zwei oder mehr ferromagnetischen Schichten gemessenen ferromagnetischen Resonanzfrequenzen anzuwenden.

Insbesondere kann das mindestens eine ferromagnetische Element mindestens eine erste ferromagnetische Schicht, eine zweite ferromagnetische Schicht und eine dritte ferromagnetische Schicht, und mindestens zwei isolierende, nichtleitende Trennschichten aufweisen. Hierbei kann insbesondere eine erste der mindestens zwei isolierenden, nichtleitenden Trennschichten zwischen der ersten ferromagnetischen Schicht und der zweiten ferromagnetischen Schicht angeordnet sein. Ferner kann insbesondere eine zweite der mindestens zwei isolierenden, nichtleitenden Trennschichten zwischen der zweiten ferromagnetischen Schicht und der dritten ferromagnetischen Schicht angeordnet sein. Vorzugsweise ist die zweite ferromagnetische Schicht zwischen der ersten ferromagnetischen Schicht und der dritten ferromagnetischen Schicht angeordnet.

Insbesondere können die erste ferromagnetische Schicht aus einem ersten ferromagnetischen Material, die zweite ferromagnetische Schicht aus einem zweiten ferromagnetischen Material, und die dritte ferromagnetische Schicht aus einem dritten ferromagnetischen Material ausgebildet sein, wobei die erste, zweite und dritte ferromagnetische Schicht hierdurch unterschiedliche ferromagnetische Resonanzfrequenzen aufweisen. Insbesondere weisen die erste ferromagnetische Schicht eine erste ferromagnetische Resonanzfrequenz, die zweite ferromagnetische Schicht eine zweite ferromagnetische Resonanzfrequenz, und die dritte ferromagnetische Schicht eine dritte ferromagnetische Resonanzfrequenz auf.

Insbesondere kann die dritte ferromagnetische Schicht auch als eine Mehrfachschicht ausgebildet sein. Die Mehrfachschicht kann hierbei beispielsweise mindestens eine erste Unterschicht aus dem ersten ferromagnetischen Material und mindestens eine zweite Unterschicht aus dem zweiten ferromagnetischen Material umfassen, welche direkt aufeinander aufgetragen bzw. angeordnet sind. Bevorzugt ist hierbei keine weitere isolierende, nichtleitende Trennschicht zwischen der ersten Unterschicht und der zweiten Unterschicht angeordnet, wodurch die erste Unterschicht und die zweite Unterschicht nicht magnetisch voneinander entkoppelt sind bzw. eine magnetische Wechselwirkung zwischen der ersten Unterschicht und der zweiten Unterschicht möglich ist. Hierdurch hat die Mehrfachschicht eine dritte ferromagnetische Resonanzfrequenz, welche insbesondere zwischen der ersten ferromagnetischen Resonanzfrequenz der ersten ferromagnetischen Schicht und der zweiten ferromagnetischen Resonanzfrequenz der zweiten ferromagnetischen Schicht. Die Mehrfachschicht ist hierbei jedoch nicht auf zwei Unterschichten beschränkt, sondern kann insbesondere zwei oder mehr Unterschichten aufweisen.

Hierbei ist die Offenbarung jedoch nicht darauf beschränkt, dass die dritte ferromagnetische Schicht als Mehrfachschicht ausgebildet ist. Vielmehr kann jede der mindestens einen ferromagnetischen Schicht als Mehrfachschicht ausgebildet sein und jeweils mindestens zwei Unterschichten aus unterschiedlichen ferromagnetischen Materialien umfassen.

Hierbei kann das mindestens eine Messelement insbesondere ausgelegt sein, eine erste ferromagnetische Resonanzfrequenz der ersten ferromagnetischen Schicht, eine zweite ferromagnetische Resonanzfrequenz der zweiten ferromagnetischen Schicht und eine dritte ferromagnetische Resonanzfrequenz der dritten ferromagnetischen Schicht des mindestens einen ferromagnetischen Elements zu messen bzw. zu ermitteln.

Insbesondere kann die Messeinrichtung ausgelegt sein, ein Drehmoment der Drehmoment-Übertragungseinrichtung basierend auf einer Verschiebung der gemessenen ersten ferromagnetischen Resonanzfrequenz und/oder der gemessenen zweiten ferromagnetischen Resonanzfrequenz und/oder der gemessenen dritten ferromagnetischen Resonanzfrequenz zu bestimmen. Beispielsweise kann die Messeinrichtung ausgelegt sein, ein erstes Drehmoment der Drehmoment-Übertragungseinrichtung basierend auf einer Verschiebung der gemessenen ersten ferromagnetischen Resonanzfrequenz zu bestimmen, ein zweites Drehmoment der Drehmoment-Übertragungseinrichtung basierend auf einer Verschiebung der gemessenen zweiten ferromagnetischen Resonanzfrequenz zu bestimmen, und ein drittes Drehmoment der Drehmoment-Übertragungseinrichtung basierend auf einer Verschiebung der gemessenen dritten ferromagnetischen Resonanzfrequenz zu bestimmen. Die Messeinrichtung kann hierbei ferner ausgelegt sein, ein das Drehmoment der Drehmoment-Übertragungseinrichtung basierend auf beispielsweise einem arithmetischen Mittel aus dem ersten Drehmoment, dem zweiten Drehmoment und dem dritten Drehmoment zu bestimmen, wobei die Messeinrichtung jedoch nicht auf eine derartige Bestimmung des Drehmoments beschränkt ist.

Vorteile der Verwendung von mindestens einem ferromagnetischen Element mit mehr als einer ferromagnetischen Resonanzfrequenz liegen in der simultanen Messung der ferromagnetischen Resonanzfrequenzen in Echtzeit. Insbesondere kann durch gleichzeitige Messung mehrerer ferromagnetischer Resonanzfrequenzen eine Verstärkung des Messeffektes, und damit eine bessere Auflösung, erreicht werden. Ferner kann hierdurch eine verbesserte Kompensation eines möglichen Temperatureinflusses, beispielsweise bei einem Getriebe im warmen Ölbad, ermöglicht werden. Ferner können auch Axialkräfte in einer Drehmoment-Übertragungseinrichtung, welche eine Messung des Drehmomentes beeinflussen, verbessert erfasst werden.

Insbesondere kann jede der mindestens einen ferromagnetischen Schicht jeweils eine Dicke von maximal etwa 500 $\mu m$, bevorzugt maximal etwa 1 $\mu m$ und/oder minimal etwa 50 nm, bevorzugt minimal etwa 150 nm aufweisen. Hierbei ist zu berücksichtigen, dass, insbesondere in Abhängigkeit von dem Material der jeweiligen mindestens einen ferromagnetischen Schicht, ein größerer Wert der Dicke der jeweiligen mindestens einen ferromagnetischen Schicht bzw. ein größeres Volumen der jeweiligen mindestens einen ferromagnetischen Schicht ein stärkeres Messsignal erzeugen und ein Signal-Rausch Verhältnis verbessern kann. Somit kann die Dicke der jeweiligen mindestens einen ferromagnetischen Schicht in Abhängigkeit von beispielsweise der Wirtschaftlichkeit der Anwendung der Sensorvorrichtung, der Messgenauigkeit der Messeinheit und/oder den magnetischen Eigenschaften der Drehmoment-Übertragungseinrichtung und/oder einem Umfeld der Drehmoment-Übertragungseinrichtung gewählt werden. Diese Auflistung von verschiedenen Parametern ist jedoch nicht als beschränkend zu interpretieren.

Insbesondere kann die Dicke der jeweiligen mindestens einen ferromagnetischen Schicht und/oder eine Dicke des mindestens einen ferromagnetischen Elements im Wesentlichen konstant sein. Durch eine solche konstante Dicke kann ein zuverlässiges und reproduzierbares Messergebnis gewährleistet werden.

Insbesondere kann das mindestens eine ferromagnetische Element mindestens eine Pufferschicht bzw. mindestens eine Zwischenschicht aufweisen, welche in dem Betriebszustand zwischen der mindestens einen ferromagnetischen Schicht und der Drehmoment-Übertragungseinrichtung angeordnet ist. Hierbei ist die mindestens eine Zwischenschicht ausgelegt, um in dem Betriebszustand die mindestens eine ferromagnetische Schicht und die Drehmoment-Übertragungseinrichtung magnetisch zu entkoppeln. Insbesondere kann die mindestens eine Zwischenschicht aus einem nichtleitenden oder schleicht leitenden Material ausgebildet sein. Hierbei ist zu berücksichtigen, dass in dem Betriebszustand die magnetischen Eigenschaften des mindestens einen ferromagnetischen Elements durch mögliche magnetische Eigenschaften der Drehmoment-Übertragungseinrichtung beeinflusst werden können. So kann eine aus einem ferromagnetischen Material ausgebildete Drehmoment-Übertragungseinrichtung die ferromagnetischen Eigenschaften, insbesondere beispielsweise eine Anisotropie des mindestens einen ferromagnetischen Elements beeinflussen und/oder ändern. Hierdurch können die Messungen der ferromagnetischen Resonanzfrequenz verfälscht oder unmöglich werden. Somit können durch die mindestens eine Zwischenschicht die Zuverlässigkeit, Genauigkeit und Reproduzierbarkeit der Messergebnisse der Messeinrichtung verbessert werden.

Insbesondere kann die mindestens eine Zwischenschicht eine Dicke von maximal etwa 500 $\mu$m, bevorzugt maximal etwa 5 $\mu$m und/oder minimal etwa 200 nm, bevorzugt minimal etwa 750 nm aufweisen. Die Dicke der mindestens einen Zwischenschicht ist hierbei jedoch nicht auf solche Werte beschränkt. Vielmehr kann die Dicke der mindestens einen Zwischenschicht beispielsweise den magnetischen Eigenschaften der Drehmoment-Übertragungseinrichtung angepasst werden. Insbesondere kann in einem Fall, in dem die Drehmoment-Übertragungseinrichtung ferromagnetische Eigenschaften aufweist, beispielsweise wenn die Drehmoment-Übertragungseinrichtung als eine aus ferritischem Stahl gefertigte Welle ausgebildet ist, die Dicke der mindestens einen Zwischenschicht falls notwendig auch über 500 $\mu$m gewählt werden, um in dem Betriebszustand die mindestens eine ferromagnetische Schicht und die Drehmoment-Übertragungseinrichtung magnetisch zu entkoppeln. Alternativ kann auch die Dicke der mindestens einen Zwischenschicht unter 200 nm implementiert werden.

Insbesondere kann das mindestens eine ferromagnetische Element mindestens eine Substratschicht bzw. mindestens ein Substrat aufweisen, welche in dem Betriebszustand zwischen der mindestens einen ferromagnetischen Schicht und der Drehmoment-Übertragungseinrichtung angeordnet ist. Das mindestens eine Substrat kann insbesondere ausgebildet sein, um das mindestens eine ferromagnetische Element vor Beschädigungen, beispielsweise vor einem Zerreißen zu schützen. Ferner kann das mindestens eine Substrat ausgebildet sein, um eine Verbindung des mindestens einen ferromagnetischen Elements mit der Drehmoment-Übertragungseinrichtung zu verstärken. Hierzu kann beispielsweise ein Material des mindestens einen Substrats derart gewählt werden, dass eine einfache Verbindung mit der Drehmoment-Übertragungseinrichtung ermöglicht wird. Somit kann durch ein Abstimmen der Materialien des mindestens einen Substrats und der Drehmoment-Übertragungseinrichtung ein sicherer Sitz des mindestens einen ferromagnetischen Elements an der Drehmoment-Übertragungseinrichtung ermöglicht werden.

Alternativ oder zusätzlich kann das mindestens eine Substrat eine Oberflächenstrukturierung, beispielsweise eine Oberflächenaufrauhung und/oder eine Oberflächenmusterung aufweisen, um eine Gesamtfläche der Oberfläche des mindestens einen Substrats zu vergrößern. Eine solche Vergrößerung der Gesamtfläche der Oberfläche des mindestens einen Substrats kann auf einer im Betriebszustand der Drehmoment-Übertragungseinrichtung abgewandten Seite eine sichere Verbindung des mindestens einen Substrats mit der mindestens einen Zwischenschicht und/oder mit der mindestens einen ferromagnetischen Schicht ermöglichen. Ferner kann eine solche Vergrößerung der Gesamtfläche der Oberfläche des mindestens einen Substrats auf einer im Betriebszustand der Drehmoment-Übertragungseinrichtung zugewandten Seite eine sichere Verbindung des mindestens einen Substrats mit der Drehmoment-Übertragungseinrichtung ermöglichen.

Das mindestens eine Substrat kann ferner insbesondere als eine Trägerschicht und/oder als ein Trägerplättchen ausgebildet sein. Hierbei kann das mindestens eine Substrat insbesondere ausgebildet sein, um das mindestens eine ferromagnetische Element bzw. die mindestens eine ferromagnetische Schicht während dessen/deren Transport und/oder während einem Anordnungsverfahren des mindestens einen ferromagnetischen Elements an der Drehmoment-Übertragungseinrichtung vor Beschädigungen und/oder Verformungen zu schützen bzw. diese zu reduzieren. Das mindestens eine Substrat kann eine Dicke von vorzugsweise maximal etwa 1mm, weiter bevorzugt maximal etwa 500 $\mu$m und/oder vorzugsweise minimal etwa 1 $\mu$m, weiter bevorzugt minimal etwa 10 $\mu$m aufweisen.

Die mindestens eine Zwischenschicht und/oder das mindestens eine Substrat können hierbei insbesondere ausgelegt sein, eine mechanische Spannung und/oder ein Drehmoment der Drehmoment-Übertragungseinrichtung, vorzugsweise im Wesentlichen vollständig, an die mindestens eine ferromagnetische Schicht zu übertragen.

Insbesondere kann das mindestens eine ferromagnetische Element in dem Betriebszustand durch Verkleben mit der Drehmoment-Übertragungseinrichtung verbindbar sein, um eine durch das Drehmoment bewirkte mechanische Spannung von der Drehmoment-Übertragungseinrichtung auf das mindestens eine ferromagnetische Element zu übertragen. Hierzu kann ein passender Klebstoff verwendet werden, beispielsweise ein Zweikomponentenklebstoff. Ein passender Klebstoff ist in diesem Sinne als ein zum Verkleben des mindestens einen ferromagnetischen Elements, insbesondere eines Materials des mindestens einen ferromagnetischen Elements mit der Drehmoment-Übertragungseinrichtung, insbesondere eines Materials der Drehmoment-Übertragungseinrichtung geeigneter Klebstoff zu verstehen. Vorzugsweise ist der Klebstoff ausgebildet, um die magnetischen Eigenschaften des mindestens einen ferromagnetischen Elements, insbesondere um ein magnetisches Anisotropiefeld des mindestens einen ferromagnetischen Elements im Wesentlichen nicht zu beeinflussen bzw. zu ändern.

Insbesondere kann das mindestens eine ferromagnetische Element in dem Betriebszustand durch Verschweißen bzw. Materialschluss mit der Drehmoment-Übertragungseinrichtung verbindbar sein, um eine durch das Drehmoment bewirkte mechanische Spannung von der Drehmoment-Übertragungseinrichtung auf das mindestens eine ferromagnetische Element zu übertragen. Hierbei kann insbesondere das Verschweißen mit oder ohne Schweißzusatzwerkstoffe erfolgen. Beispielsweise kann das mindestens eine ferromagnetische Element in dem Betriebszustand durch Ultraschallschweißen mit der Drehmoment-Übertragungseinrichtung verbindbar sein. Das Verschweißen kann vorzugsweise in einem externen statischen Magnetfeld erfolgen, so dass ein uniaxiales magnetisches Anisotropiefeld in der Ebene des ferromagnetischen Elements entweder unverändert erhalten oder kontrolliert angepasst oder erzeugt werden kann.

Insbesondere kann das mindestens eine ferromagnetische Element in dem Betriebszustand durch Verpressen mit der Drehmoment-Übertragungseinrichtung verbindbar sein, um eine durch das Drehmoment bewirkte mechanische Spannung von der Drehmoment-Übertragungseinrichtung auf das mindestens eine ferromagnetische Element zu übertragen.

Insbesondere kann das mindestens eine ferromagnetische Element in dem Betriebszustand durch chemisches Reagieren bzw. durch eine chemische Reaktion mit der Drehmoment-Übertragungseinrichtung verbindbar sein, um eine durch das Drehmoment bewirkte mechanische Spannung von der Drehmoment-Übertragungseinrichtung auf das mindestens eine ferromagnetische Element zu übertragen. Hierbei kann insbesondere das mindestens eine ferromagnetische Element derart ausgelegt sein, dass eine in dem Betriebszustand an der Drehmoment-Übertragungseinrichtung angeordnete Seite des mindestens einen ferromagnetischen Elements chemisch mit der Drehmoment-Übertragungseinrichtung reagiert, beispielsweise durch Bildung von ionischen und/oder kovalenten Bindungen.

Insbesondere kann das mindestens eine ferromagnetische Element in dem Betriebszustand durch Verrasten bzw. Formschluss mit der Drehmoment-Übertragungseinrichtung verbindbar sein, um eine durch das Drehmoment bewirkte mechanische Spannung von der Drehmoment-Übertragungseinrichtung auf das mindestens eine ferromagnetische Element zu übertragen. Hierbei kann das mindestens eine ferromagnetische Element mindestens ein Verrastelement aufweisen, wobei das mindestens eine Verrastelement ausgelegt ist, in dem Betriebszustand mit mindestens einem korrespondierenden Verrastelement der Drehmoment-Übertragungseinrichtung in Eingriff zu gelangen bzw. zu verrasten.

Insbesondere kann die Messeinrichtung ausgelegt sein, das Drehmoment der Drehmoment-Übertragungseinrichtung basierend auf einer Verschiebung der gemessenen ferromagnetischen Resonanzfrequenz zu bestimmen, wobei eine nicht perfekte Übertragung einer durch das Drehmoment bewirkten mechanischen Spannung über die Verbindung der Drehmoment-Übertragungseinrichtung und des mindestens einen ferromagnetischen Elements berücksichtigt ist. Insbesondere kann die Verbindung der Drehmoment-Übertragungseinrichtung und des mindestens einen ferromagnetischen Elements die mechanische Spannung zumindest teilweise absorbieren und/oder zumindest teilweise umlenken. Vorzugsweise kann die Gleichung (12) um mindestens zwei Korrekturparameter erweitert werden:

$$H_{u,eff} = \sqrt{\left[\frac{3\lambda_S}{J_S}(\sigma+\alpha)\beta\right]^2 + \left[H_u - \frac{3\lambda_S}{J_S}(\sigma+\alpha)\beta\right]^2} \qquad (14)$$

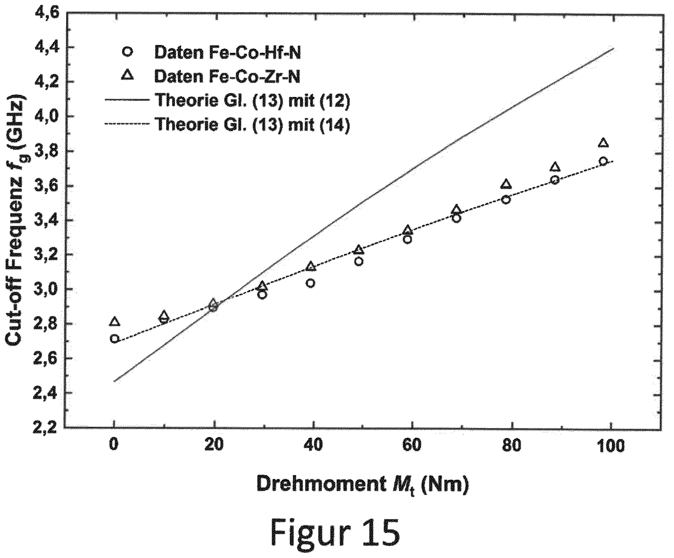

Der Parameter $\alpha$ repräsentiert eine durch die Verbindung bewirkte Vorspannung des mindestens einen ferromagnetischen Elements, und der Parameter $\beta$ repräsentiert einen Absorptions- bzw. Dämpfungsfaktor. Eine solche Korrektur wird beispielhaft in Figur 15 gezeigt.

Für den Fall, dass das mindestens eine ferromagnetische Element mindestens eine Zwischenschicht und/oder mindestens ein Substrat umfasst, können die Werte für die Vorspannung $\alpha$ und/oder den Dämpfungsfaktor $\beta$ angepasst werden, um eine nicht perfekte Übertragung des Drehmoments durch die Verbindung zwischen dem mindestens einen Substrat und der mindestens einen Zwischenschicht und/oder der mindestens einen ferromagnetischen Schicht, und/oder zwischen der mindestens einen Zwischenschicht und der mindestens einen ferromagnetischen Schicht zu berücksichtigen.

Die Messeinrichtung kann ausgelegt sein, in mindestens einem Kalibrierungsschritt die nicht perfekte Übertragung der mechanischen Spannung durch die Verbindung von der Drehmoment-Übertragungseinrichtung und des mindestens einen ferromagnetische Elements zu bestimmen bzw. festzulegen. Insbesondere können die Werte für die Vorspannung $\alpha$ und/oder den Dämpfungsfaktor $\beta$ von der Messeinrichtung vorgeschrieben sein und/oder anhand des mindestens einen Kalibrierungsschritts festgelegt sein und/oder durch einen Benutzer vorgegeben sein.

Insbesondere kann in dem Betriebszustand ein kleinster Abstand zwischen mindestens einem Messelement und mindestens einem ferromagnetischen Element einen Wert von maximal etwa 1500 $\mu$m, bevorzugt maximal etwa 500 $\mu$m, ferner bevorzugt maximal etwa 300 $\mu$m, am meisten bevorzugt maximal etwa 150 $\mu$m aufweisen.

Insbesondere kann während einer Messung der ferromagnetischen Resonanzfrequenz zumindest eines ferromagnetischen Elements ein Messwinkel zwischen einer Oberfläche des mindestens einen Messelements und des mindestens einen ferromagnetischen Elements einen Wert von mindestens etwa 0°, bevorzugt mindestens etwa 12° und maximal etwa 28°, bevorzugt maximal etwa 16° aufweisen. Hierbei kann sich zumindest ein Bereich des ferromagnetischen Elements bei einem angelegten Drehmoment an die Drehmoment-Übertragungseinrichtung stärker der Messeinrichtung bzw. einem HF-Messkopf (insbesondere Triplate-Stripline, wie unten ferner beschrieben) der Messeinrichtung nähern, wodurch eine leichtere Einkopplung von HF-Feldlinien in das mindestens eine ferromagnetische Element in diesem Messwinkelbereich ermöglicht wird. Dies kann vorzugsweise eine erhöhte Intensität eines Messsignals bewirken, da eine HF-Felddichte zum Messkopf hin (und damit ein absorbiertes bzw. reflektiertes Antwortsignal) mit geringer werdendem Abstand zwischen Messkopf und ferromagnetischen Element und günstigem Messwinkel folglich größer wird. Dies kann insbesondere bei Drehmomentmessungen an Drehmoment-Übertragungseinrichtungen, welche sich nicht kontinuierlich um eine Drehachse der Drehmoment-Übertragungseinrichtung drehen eine erhöhte Messsignalstärke bewirken.

Insbesondere kann die Drehmoment-Übertragungseinrichtung als eine Welle ausgebildet sein. Vorzugsweise kann die Drehmoment-Übertragungseinrichtung im Wesentlichen zylinderartig und/oder im Wesentlichen achsensymmetrisch bezüglich einer Drehachse der Drehmoment-Übertragungseinrichtung ausgebildet sein.

Mindestens ein Messelement des mindestens einen Messelements ist als Hochfrequenz-Triplate-Stripline ausgebildet, wobei die Messung der ferromagnetischen Resonanzfrequenz insbesondere auf einer Verstimmung der Hochfrequenz-Triplate-Stripline basiert. Vorzugsweise kann mindestens ein Messelement des mindestens einen Messelements als Hochfrequenz-Triplate-Stripline ausgebildet sein und ein weiteres Messelement des mindestens einen Messelements als ein zu der Hochfrequenz-Triplate-Stripline verschiedenes Messelement ausgebildet sein. Vorzugsweise kann das mindestens eine Messelement zumindest zwei im Wesentlichen unterschiedliche Messelemente umfassen. Insbesondere kann die Hochfrequenz-Triplate-Stripline auf eine Impedanz von etwa 50 Ohm ausgelegt sein. Ferner kann die Hochfrequenz-Triplate-Stripline insbesondere in einem Reflexionsmodus einer definiert geführten elektromagnetischen Hochfrequenz-Welle betrieben werden. Hierbei wird die Verstimmung der Impedanz bzw. der Hochfrequenz-Triplate-Stripline durch die teilweise oder nahezu vollständige Absorption von vor der Hochfrequenz-Triplate-Stripline entstehenden und unterschiedlichen elektromagnetischen Wellenamplitudenverhältnissen verursacht. Insbesondere kann die Hochfrequenz-Triplate-Stripline ausgelegt sein, in dem Reflexionsmodus zur Messung der ferromagnetischen Resonanzfrequenz mindestens ein Reflexionssignal zu empfangen bzw. zu messen, wobei insbesondere das mindestens eine Reflexionssignal bei einer festen Messfrequenz ermittelt bzw. gemessen wird. Die feste Messfrequenz kann insbesondere nahe der ferromagnetischen Resonanzfrequenz liegen, beispielsweise bei mindestens einem 0.8fachen der ferromagnetischen Resonanzfrequenz, bevorzugt mindestens einem 0.9fachen der ferromagnetischen Resonanzfrequenz und/oder maximal bei einem 1.2fachen der ferromagnetischen Resonanzfrequenz, bevorzugt maximal bei einem 1.1.fachen der ferromagnetischen Resonanzfrequenz. Die feste Messfrequenz kann insbesondere bei kleinen Frequenzen liegen, beispielsweise maximal bei einem 0.25fachen der ferromagnetischen Resonanzfrequenz, bevorzugt maximal bei einem 0.1 fachen der ferromagnetischen Resonanzfrequenz, weiter bevorzugt maximal bei einem 0.05fachen der ferromagnetischen Resonanzfrequenz.

Im Gegensatz müssen in üblichen Striplines ferromagnetische Schichten direkt in die Stripline integriert werden, um HF-Eigenschaften der ferromagnetischen Schichten zu messen. Diese Messungen sind nicht berührungslos, da die ferromagnetische Schicht und ein Basissubstrat, auf dem die ferromagnetische Schicht angeordnet ist, zwischen einer Signalleitung und einer Masse der Stripline liegen müssen, um eine Messung frequenzabhängiger physikalischer Größen, z.B. einer frequenzabhängigen Permeabilität, durchzuführen.

Hierbei können das mindestens eine ferromagnetische Element und das mindestens eine Messelement derart ausgebildet sein, dass eine Eigenfrequenz des mindestens einen Messelements oberhalb einer Resonanzfrequenz des mindestens einen ferromagnetischen Elements liegt. Die Eigenfrequenz mindestens einen Messelements ist hierbei insbesondere abhängig von der Größe bzw. Länge des mindestens einen Messelements. Hierdurch können insbesondere Geometrieeffekte des mindestens einen Messelements bzw. des mindestens einen Messkopfes bei der Bestimmung des Drehmoments der Drehmoment-Übertragungseinrichtung vermieden bzw. reduziert werden.

Insbesondere kann das mindestens eine Messelement im Betriebszustand im Wesentlichen entlang einer Messebene angeordnet sein, wobei die Messebene im Wesentlichen tangential zu einer Oberfläche der Drehmoment-Übertragungseinrichtung ausgebildet ist. Hierbei ist das mindestens eine Messelement jedoch nicht auf eine solche Form beschränkt, sondern kann andere Formen aufweisen. Beispielsweise kann das mindestens eine Messelement im Wesentlichen plattenartig und/oder im Wesentlichen U-förmig und/oder im Wesentlichen zumindest teilweise ringartig ausgebildet sein. Insbesondere kann das mindestens eine Messelement im Betriebszustand beispielsweise im Wesentlichen entlang einer umlaufenden Richtung bezüglich einer Drehachse der Drehmoment-Übertragungseinrichtung die Drehmoment-Übertragungseinrichtung zumindest teilweise, beispielsweise über einen Winkelbereich von mindestens 45°, vorzugsweise mindestens 90° und/oder von maximal 360°, vorzugsweise maximal 270°, umgeben. Alternativ kann das mindestens eine Messelement im Betriebszustand beispielsweise im Wesentlichen entlang einer umlaufenden Richtung bezüglich einer Drehachse der Drehmoment-Übertragungseinrichtung die Drehmoment-Übertragungseinrichtung vollständig, beispielsweise im Wesentlichen mantelartig umgeben.

Insbesondere kann das mindestens eine ferromagnetische Element als mindestens ein umlaufendes ferromagnetisches Element ausgebildet sein, wobei das mindestens eine umlaufende ferromagnetische Element in dem Betriebszustand die Drehmoment-Übertragungseinrichtung entlang einer umlaufenden Richtung bezüglich einer Drehachse der Drehmoment-Übertragungseinrichtung im Wesentlichen vollständig umgibt. Hierbei kann das mindestens eine umlaufende ferromagnetische Element und das mindestens eine Messelement derart angeordnet sein, dass bei einer Belastung der Drehmoment-Übertragungseinrichtung mit einem Drehmoment eine kontinuierliche Messung der ferromagnetischen Resonanzfrequenz des mindestens einen umlaufenden ferromagnetischen Elements ermöglicht ist.

Beispielsweise kann das mindestens eine ferromagnetische Element im Wesentlichen plattenartig und/oder im Wesentlichen U-förmig/V-förmig und/oder im Wesentlichen zumindest teilweise ringartig und/oder im Wesentlichen hülsenartig ausgebildet sein.

Insbesondere kann das mindestens eine ferromagnetische Element mindestens zwei ferromagnetische Elemente umfassen, wobei die mindestens zwei ferromagnetischen Elemente in umlaufender Richtung bezüglich einer Drehachse der Drehmoment-Übertragungseinrichtung an der Drehmoment-Übertragungseinrichtung angeordnet sind. In anderen Worten kann das mindestens eine ferromagnetische Element vorzugsweise mindestens zwei ferromagnetische Elemente umfassen, wobei die mindestens zwei ferromagnetischen Element derart an der Drehmoment-Übertragungseinrichtung angeordnet sind, dass sich die mindestens zwei ferromagnetischen Elemente bei einer Drehbewegung der Drehmoment-Übertragungseinrichtung um deren Drehachse sequentiell bzw. nacheinander zwischen der Drehachse und dem mindestens einen Messelement hindurchbewegen bzw. hindurchdrehen.

Hierbei kann insbesondere mindestens eines der mindestens zwei ferromagnetischen Elemente im Wesentlichen planar bzw. eben ausgebildet sein und in dem Betriebszustand im Wesentlichen parallel zu einer tangentialen Ebene der Oberfläche der Drehmoment-Übertragungseinrichtung ausgerichtet sein. Das mindestens eine planare bzw. ebene ferromagnetische Element kann hierbei insbesondere in einer Aussparung der Drehmoment-Übertragungseinrichtung angeordnet sein. Das mindestens eine planare bzw. ebene ferromagnetische Element kann insbesondere zumindest teilweise einen Vorsprung an der Drehmoment-Übertragungseinrichtung bilden.

Insbesondere kann mindestens eines der mindestens zwei ferromagnetischen Elemente als ein teilweise umlaufendes ferromagnetisches Element ausgebildet sein und in dem Betriebszustand die Drehmoment-Übertragungseinrichtung entlang einer umlaufenden Richtung bezüglich einer Drehachse der Drehmoment-Übertragungseinrichtung zumindest teilweise umgeben. Beispielsweise kann mindestens eines des mindestens einen ferromagnetischen Elements im Wesentlichen zylinderschalen-förmig und/oder teilring-förmig und/oder halbring-förmig ausgebildet sein.

Insbesondere können mindestens zwei des mindestens einen ferromagnetischen Elements als jeweils ein umlaufendes ferromagnetisches Element ausgebildet sein und in dem Betriebszustand die Drehmoment-Übertragungseinrichtung entlang einer umlaufenden Richtung bezüglich einer Drehachse der Drehmoment-Übertragungseinrichtung vollständig umgeben. Die mindestens zwei umlaufenden ferromagnetischen Elemente können hierbei parallel zueinander ausgebildet sein, wobei die mindestens zwei parallelen umlaufenden ferromagnetischen Elemente insbesondere entlang einer axialen Richtung bezüglich einer Drehachse der Drehmoment-Übertragungsvorrichtung beabstandet sein können.

Insbesondere kann das mindestens eine ferromagnetische Element eine magnetische Anisotropie aufweisen. Die magnetische Anisotropie bzw. eine Vorzugsrichtung des mindestens einen ferromagnetischen Elements kann insbesondere durch ein Glühen bzw. ein Annealing des mindestens einen ferromagnetischen Elements in einem externen statischen Magnetfeld erzeugt worden sein. Das Glühen bzw. Annealing kann insbesondere eine thermische Behandlung des mindestens einen ferromagnetischen Elements, beispielsweise bei hohen Temperaturen und/oder nahe dem Schmelzpunkt eines Materials des mindestens einen ferromagnetischen Elements und/oder der mindestens einen ferromagnetische Schicht umfassen.

Insbesondere kann die Messeinrichtung ferner mindestens ein Magnetfeldelement umfassen, wobei das mindestens eine Magnetfeldelement ausgelegt ist, in dem Betriebszustand ein Magnetfeld zu erzeugen, um in dem mindestens einen ferromagnetischen Element eine magnetische Anisotropie zu erzeugen oder zu beeinflussen. Hierbei kann das mindestens eine Magnetfeldelement mindestens einen Permanentmagneten und/oder mindestens einen Elektromagneten aufweisen. Insbesondere kann das mindestens eine Magnetfeldelement ausgelegt sein, die magnetische Anisotropie in einer Ebene des mindestens einen ferromagnetischen Elements, insbesondere während einer Messung der ferromagnetischen Resonanzfrequenz des mindestens einen ferromagnetischen Elements zu erzeugen. Das von dem mindestens einen Magnetfeldelement erzeugte Magnetfeld kann insbesondere eine magnetische Flussdichte von maximal 50 mT, bevorzugt maximal 10 mT, insbesondere bevorzugt maximal 5 mT aufweisen.

Ein Aspekt betrifft ein Verfahren zur Bestimmung eines Drehmoments einer Drehmoment-Übertragungseinrichtung, umfassend Anordnen von mindestens einem ferromagnetischen Element an der Drehmoment-Übertragungseinrichtung, Messen einer ferromagnetischen Resonanzfrequenz des zumindest einen ferromagnetischen Elements, und Bestimmen des Drehmoments der Drehmoment-Übertragungseinrichtung basierend auf einer Verschiebung der gemessenen ferromagnetischen Resonanzfrequenz.

Das Verfahren kann hierbei insbesondere Merkmale gemäß einer beliebigen Kombination der oben genannten Merkmale der Sensorvorrichtung aufweisen.

Insbesondere kann das Anordnen des mindestens einen ferromagnetischen Elements ein Verkleben, Verschweißen, Verpressen, chemisches Reagieren und/oder Verrasten des mindestens einen ferromagnetischen Elements mit der Drehmoment-Übertragungseinrichtung umfassen.

Insbesondere kann das Bestimmen des Drehmoments der Drehmoment-Übertragungseinrichtung ein Berücksichtigen einer nicht perfekten Übertragung von mechanischer Spannung durch eine Verbindung von der Drehmoment-Übertragungseinrichtung und des mindestens einen ferromagnetische Elements umfassen. Das Verfahren kann ferner insbesondere ein Bestimmen der nicht perfekten Übertragung der mechanischen Spannung bzw. ein Bestimmen physikalischer Parameter der nicht perfekten Übertragung der mechanischen Spannung durch die Verbindung von der Drehmoment-Übertragungseinrichtung und des mindestens einen ferromagnetische Elements umfassen. Die physikalischen Parameter können beispielsweise eine durch die Verbindung bewirkte Vorspannung $\alpha$ des mindestens einen ferromagnetischen Elements und einen Absorptions- bzw. Dämpfungsfaktor $\beta$, wie insbesondere in Gleichung (14) angeführt, umfassen.

Insbesondere kann das Verfahren ein Erzeugen mindestens einer ferromagnetischen Schicht umfassen. Insbesondere kann die mindestens eine ferromagnetische Schicht durch ein Ablagern eines Materials der mindestens einen ferromagnetischen Schicht, insbesondere durch Sputtern, bevorzugt durch Magnetronsputtern, erzeugt werden.

Insbesondere kann das Erzeugen mindestens einer ferromagnetischen Schicht ferner mindestens umfassen: ein Erzeugen einer ersten ferromagnetischen Schicht, ein Erzeugen einer ersten isolierenden, nichtleitenden Trennschicht auf der ersten ferromagnetischen Schicht, und ein Erzeugen einer zweiten ferromagnetischen Schicht auf der ersten isolierenden, nichtleitenden Trennschicht. Insbesondere kann das Messen der ferromagnetischen Resonanzfrequenz des zumindest einen ferromagnetischen Elements ferner mindestens umfassen: ein Messen bzw. Ermitteln einer ersten ferromagnetischen Resonanzfrequenz der ersten ferromagnetischen Schicht und ein Messen bzw. Ermitteln einer zweiten ferromagnetischen Resonanzfrequenz der zweiten ferromagnetischen Schicht.

Insbesondere kann das Bestimmen des Drehmoments der Drehmoment-Übertragungseinrichtung mindestens ein Bestimmen des Drehmoments der Drehmoment-Übertragungseinrichtung basierend auf einer Verschiebung der gemessenen ersten ferromagnetischen Resonanzfrequenz und/oder der gemessenen zweiten ferromagnetischen Resonanzfrequenz umfassen.

Insbesondere kann das Verfahren ferner ein Erzeugen eines Substrats, und ein Erzeugen einer Zwischenschicht auf dem Substrat umfassen, wobei eine ferromagnetische Schicht der mindestens einen ferromagnetischen Schichten auf der Zwischenschicht erzeugt wird, wobei die Zwischenschicht ausgelegt ist, in einem Betriebszustand der Sensorvorrichtung die mindestens eine ferromagnetische Schicht und die Drehmoment-Übertragungseinrichtung magnetisch zu entkoppeln.

Insbesondere können die mindestens eine ferromagnetische Schicht und/oder eine Zwischenschicht und/oder ein Substrat direkt auf der Drehmoment-Übertragungseinrichtung aufgetragen werden.

Insbesondere kann das Verfahren ferner ein Glühen bzw. ein Annealing (siehe oben) des mindestens einen ferromagnetischen Elements in einem externen statischen Magnetfeld zur Erzeugung einer magnetischen Anisotropie des mindestens einen ferromagnetischen Elements umfassen. Insbesondere kann hierdurch durch Vorgeben des externen statischen Magnetfelds eine gewünschte magnetische Anisotropie des mindestens einen ferromagnetischen Elements eingestellt werden.

Ferner werden zwei exemplarische ferromagnetische Elemente mit jeweils einem exemplarischen Herstellungsverfahren beschrieben.

Beispiel 1

Im Rahmen eines ersten Beispiels werden ein exemplarisches ferromagnetisches Element sowie ein exemplarisches Herstellungsverfahren des exemplarischen ferromagnetischen Elements beschrieben.

Hierzu wird insbesondere ein poliertes Wolframcarbid-Kobalt(WC-Co)-Hartmetall-Substrat bereitgestellt. Das WC-Co Substrat weist hierbei 10.5 Gew.% Kobalt und Ausmaße von 12.7 mm x 12.7 mm x 0.4 mm (Länge x Breite x Dicke) auf.

Eine Siliziumoxid Zwischenschicht wird auf dem WC-Co Substrat durch nicht-reaktives RF-Magnetronsputtern in einer puren Argon-Atmosphäre bei 0.2Pa aufgetragen. Das Auftragen der Siliziumoxid Zwischenschicht erfolgt unter Verwendung eines 6-Zoll SiOz Sputtertargets bei einer Leistung von 300W. Hierdurch wird eine Siliziumoxid Zwischenschicht mit einer Dicke von etwa 3 $\mu$m auf dem WC-Co Substrat aufgetragen, wobei die Siliziumoxid Zwischenschicht eine chemische Zusammensetzung von ungefähr 1:2 (Si:O) aufweist. Ungefähr bedeutet in diesem Sinne umfassend von Abweichung von bis zu 15%.

Eine weichmagnetische ferromagnetische Eisen-Kobalt-Hafnium-Stickstoff (Fe-Co-Hf-N) Schicht wird durch reaktives RF-Magnetronsputtern auf der Zwischenschicht in einer Argon/Stickstoff (Ar/N$_2$) Atmosphäre bei 0.2Pa aufgetragen. Ein Gasfluss-Verhältnis von Ar/N$_2$ wird hierbei bei 100sccm/3sccm gehalten. Das Auftragen der Fe-Co-Hf-N Schicht erfolgt unter Verwendung eines 6-Zoll Fe$_{37}$Co$_{46}$Hf$_{17}$ Sputtertargets bei einer Leistung von 250W. Hierdurch wird eine Fe-Co-Hf-N Schicht mit einer Dicke von etwa 200 nm auf dem WC-Co Substrat aufgetragen, wobei die Fe-Co-Hf-N Schicht eine chemische Zusammensetzung von ungefähr 32:45:11:12 (Fe:Co:Hf:N) aufweist. Ungefähr bedeutet in diesem Sinne umfassend von Abweichungen von jeweils bis zu etwa 25%.

Nach Auftragen der Silizium Zwischenschicht und der Fe-Co-Hf-N Schicht wird das ferromagnetische Element bei 400°C in einem statischen Magnetfeld von 50 mT für 1 Stunde geglüht (siehe oben). Das Glühen erfolgt hierbei in einem Vakuum mit einem Druck von $p < 10^{-7}$ mbar, wobei das Glühen eine uniaxiale magnetische Anisotropie der ferromagnetischen Schicht erzeugt.

Das geglühte ferromagnetische Element kann ferner mit einer Drehmoment-Übertragungseinrichtung verbunden werden, z.B. mit einer Welle verklebt werden.

Beispiel 2

Im Rahmen eines zweiten Beispiels werden ein weiteres exemplarisches ferromagnetisches Element sowie ein weiteres exemplarisches Herstellungsverfahren des exemplarischen ferromagnetischen Elements beschrieben.

Hierzu wird insbesondere ein Silizium (Si (1 0 0)) Substrat bereitgestellt. Das Si-Substrat weist hierbei Ausmaße von 9.9 mm x 9.9 mm x 0.4 mm (Länge x Breite x Dicke) auf. Das Si-Substrat ist ferner thermisch oxidiert und weist eine 1 μm Zwischenschicht von thermisch oxidiertem Silizium auf.

Eine ferromagnetische Eisen-Kobalt-Zirkonium-Stickstoff (Fe-Co-Zr-N) Schicht wird durch reaktives RF-Magnetronsputtern auf der Zwischenschicht in einer Argon/Stickstoff (Ar/N$_2$) Atmosphäre bei 0.2Pa aufgetragen. Ein Gasfluss-Verhältnis von Ar/N$_2$ wird hierbei bei 100sccm/3sccm gehalten. Das Auftragen der Fe-Co-Zr-N Schicht erfolgt unter Verwendung eines 6-Zoll $Fe_{37}Co_{46}Zr_{17}$ Sputtertargets bei einer Leistung von 250W. Hierdurch wird eine Fe-Co-Zr-N Schicht mit einer Dicke von etwa 788 nm auf der Zwischenschicht aufgetragen, wobei die Fe-Co-Hf-N Schicht eine chemische Zusammensetzung von ungefähr 40:37:11:12 (Fe:Co:Zr:N) aufweist. Ungefähr bedeutet in diesem Sinne umfassend von Abweichungen von jeweils bis zu etwa 25%.

Nach Auftragen der Fe-Co-Zr-N Schicht wird das ferromagnetische Element bei 400°C in einem statischen Magnetfeld von 50 mT für 1 Stunde geglüht. Das Glühen erfolgt hierbei in einem Vakuum mit einem Druck von $p < 10^{-7}$ mbar, wobei das Glühen eine uniaxiale magnetische Anisotropie der ferromagnetischen Schicht erzeugt.

Das geglühte ferromagnetische Element kann ferner mit einer Drehmoment-Übertragungseinrichtung verbunden werden, z.B. mit einer Welle verklebt werden.

Die Erfindung wird nachfolgend anhand von in Figuren illustrativ dargestellten exemplarischen Ausführungsformen ferner beschrieben. Die exemplarischen Ausführungsformen sind hierbei nicht als beschränkend zu interpretieren. Es zeigen:

| | |
|---|---|
| **Figur 1:** | Eine perspektivische Ansicht einer ersten exemplarischen Sensorvorrichtung im Betriebszustand; |
| **Figur 2:** | Eine Querschnittsansicht der Sensorvorrichtung aus Figur 1; |
| **Figur 3** | Eine perspektivische Ansicht einer zweiten exemplarischen Sensorvorrichtung im Betriebszustand; |
| **Figur 4:** | Eine Querschnittsansicht der Sensorvorrichtung aus Figur 3; |
| **Figur 5:** | Eine Querschnittsansicht einer dritten exemplarischen Sensorvorrichtung im Betriebszustand; |
| **Figur 6:** | Eine Seitenansicht der Sensorvorrichtung aus Figur 5; |
| **Figur 7:** | Eine perspektivische Querschnittsansicht eines exemplarischen ferromagnetischen Elements; |
| **Figur 8:** | Eine schematische Darstellung eines Verspannens einer Drehmoment-Übertragungseinrichtung und eines daran angeordneten ferromagnetischen Elements; |
| **Figur 9:** | Sechs Messreihen der ferromagnetischen Resonanzfrequenz für das in Beispiel 2 hergestellte ferromagnetische Element; |
| **Figur 10:** | Eine graphische Darstellung einer ferromagnetischen cut-off Resonanzfrequenz der in Figur 9 gezeigten Messreihen; |
| **Figur 11:** | Eine graphische Darstellung eine Vielzahl von Messreihen der ferromagnetischen Resonanzfrequenz in Abhängigkeit von der Distanz zwischen einem Messelement und einem ferromagnetischen Element in der Messposition; |
| **Figur 12:** | Eine graphische Darstellung eine Vielzahl von Messreihen der ferromagnetischen Resonanzfrequenz in Abhängigkeit von dem Messwinkel zwischen einem Messelement und einem ferromagnetischen Element in der Messposition; |
| **Figur 13A und 13B:** | Eine beispielhafte experimentale Messeinrichtung zur Bestimmung einer ferromagnetischen Resonanzfrequenz und eine Nahansicht einer beispielhaften Sensorvorrichtung; |
| **Figur 14A und 14B:** | Einen Vergleich von Messreihen der ferromagnetischen Resonanzfrequenz eines wie in Beispiel 1 hergestellten ferromagnetischen Elements und eines wie in Beispiel 2 hergestellten ferromagnetischen Elements; |
| **Figur 15:** | Einen Vergleich der theoretischen Werte der ferromagnetischen Resonanzfrequenz auf Basis von Gleichung 13 mit Gleichung 12 und von Gleichung 13 mit Gleichung 14; |

| Figur 16: | Eine schematische Darstellung einer beispielhaften Sensorvorrichtung an einer Welle; |
|---|---|
| Figur 17: | Einen Screenshot einer Messreihe der ferromagnetischen Resonanzfrequenz gemäß der in Figur 16 gezeigten beispielhaften Sensorvorrichtung. |
| Figur 18A bis 18D | perspektivische Querschnittsansichten von exemplarischen ferromagnetischen Elementen; |

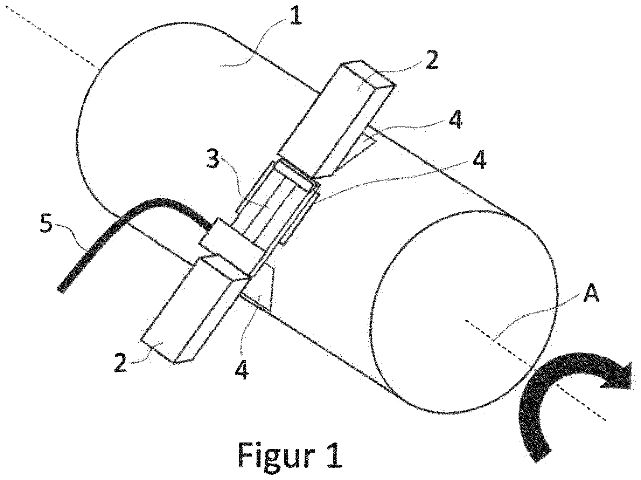

Figur 1 zeigt eine perspektivische Ansicht einer ersten exemplarischen Sensorvorrichtung im Betriebszustand.

Hierbei ist eine Drehmoment-Übertragungseinrichtung 1 als eine zylinderförmige Welle ausgebildet, wobei sich die Drehmoment-Übertragungseinrichtung 1 um eine Drehachse A drehen kann, um ein Drehmoment zu übertragen.

An der Drehmoment-Übertragungseinrichtung 1 sind sechs ferromagnetische Elemente 4 angeordnet, von denen drei ferromagnetische Elemente 4 aufgrund der perspektivischen Ansicht von der Drehmoment-Übertragungseinrichtung 1 verdeckt sind. Die sechs ferromagnetischen Elemente 4 sind paarweise angeordnet, wobei die paarweise angeordneten ferromagnetischen Elemente 4 jeweils gegenüberliegend bezüglich der Drehachse A der Drehmoment-Übertragungseinrichtung 1 angeordnet sind. Die ferromagnetischen Elemente 4 sind insbesondere in umlaufender Richtung um die Drehachse A in gleichen Abständen voneinander angeordnet. Hierdurch kann die Bildung einer Unwucht der Drehmoment-Übertragungseinrichtung 1 bezüglich einer Drehbewegung um die Drehachse A vermieden werden.

Die sechs ferromagnetischen Elemente 4 umfassen vorzugsweise jeweils mindestens ein ferromagnetisches, insbesondere ein weichmagnetisches ferromagnetisches Material.

Die ferromagnetischen Elemente 4 sind jeweils im Wesentlichen quadratisch ausgebildet bzw. die ferromagnetischen Elemente 4 weisen insbesondere in einer jeweiligen Ebene senkrecht zu einer radialen Richtung bezüglich der Drehachse A eine im Wesentlichen quadratische Querschnittsfläche auf. Die ferromagnetischen Elemente 4 können jeweils im Wesentlichen eben bzw. planar bzw. plattenartig ausgebildet sein. Insbesondere weist die Drehmoment-Übertragungseinrichtung 1 korrespondierende Aussparungen auf einer umlaufenden Oberfläche der Drehmoment-Übertragungseinrichtung 1 auf, wobei jeweils ein ferromagnetisches Element 4 in jeweils einer der korrespondierenden Aussparungen aufgenommen ist.

Durch ein Anlegen eines Drehmoments an die Drehmoment-Übertragungseinrichtung 1 erfahren die ferromagnetischen Elemente 4 eine mechanische Spannung bzw. eine Scherkraft. In anderen Worten werden die ferromagnetischen Elemente 4 durch das Anlegen des Drehmoments an Drehmoment-Übertragungseinrichtung 1 vorgespannt. Hierdurch wird eine magnetische Anisotropie bzw. ein magnetisches Anisotropiefeld entlang einer Ebene der ferromagnetischen Elemente 4 gestört bzw. verändert, wodurch die ferromagnetische Resonanzfrequenz der ferromagnetischen Elemente 4 verschoben wird.

Diese Verschiebung der ferromagnetischen Resonanzfrequenz der ferromagnetischen Elemente 4 wird durch ein Messelement 3 einer Messeinrichtung gemessen. Insbesondere ist das Messelement 3 derart über der Drehmoment-Übertragungseinrichtung 1 angeordnet, dass sich die ferromagnetischen Elemente 4 bei einer Drehbewegung der Drehmoment-Übertragungseinrichtung 1 zwischen der Drehachse A und dem Messelement 3 hindurchdrehen bzw. in umlaufender Richtung um die Drehachse A hindurchbewegen.

Das Messelement 3 kann insbesondere als Hochfrequenz-Triplate-Stripline ausgebildet sein.

Das Messelement 3 der Messeinrichtung kann entweder direkt basierend auf der gemessenen Verschiebung der ferromagnetischen Resonanzfrequenz bzw. auf der gemessenen ferromagnetischen Resonanzfrequenz ein an die Drehmoment-Übertragungseinrichtung 1 angelegtes Drehmoment bestimmen, oder gemessene Daten der Verschiebung der ferromagnetischen Resonanzfrequenz bzw. der ferromagnetischen Resonanzfrequenz weiterleiten. Hierbei kann insbesondere das Messelement 3 mit einem Verbindungselement 5 verbunden sein. Das Verbindungselement 5 kann insbesondere ausgelegt sein, Daten und/oder Strom zu übertragen. Ferner können Steuersignale an das Messelement 3 bzw. die Messeinrichtung und/oder das Magnetfeldelement 2 durch das Verbindungselement 5 übermittelt werden.

Figur 1 zeigt ferner ein Magnetfeldelement 2, wobei das Magnetfeldelement 2 ausgelegt ist, in dem Betriebszustand ein Magnetfeld insbesondere zwischen dem Messelement 3 und der Drehmoment-Übertragungseinrichtung 1 zu erzeugen. Während einer Drehbewegung der Drehmoment-Übertragungseinrichtung 1 rotieren die ferromagnetischen Elemente 4 nacheinander insbesondere in eine Messposition zwischen dem Messelement 3 und der Drehmoment-Übertragungseinrichtung 1, wobei das Magnetfeldelement 2 insbesondere ausgelegt ist, in einem ferromagnetischen Element 4 in der Messposition eine magnetische Anisotropie zu erzeugen oder zu beeinflussen. Hierdurch kann das Magnetfeldelement 2 insbesondere die magnetische Anisotropie in einer Ebene des jeweiligen ferromagnetischen Elements 4 erzeugen bzw. beeinflussen, insbesondere während einer Messung der ferromagnetischen Resonanzfrequenz des jeweiligen ferromagnetischen Elements 4.

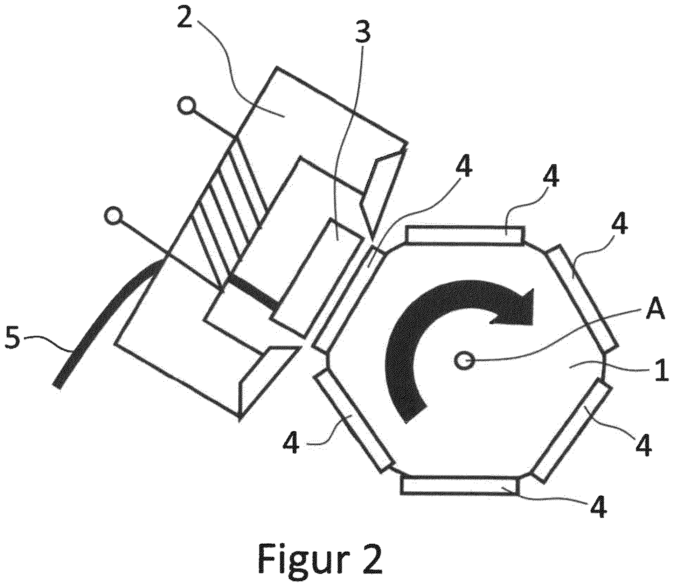

In Figur 1 ist das Magnetfeldelement 2 nur teilweise gezeigt, um auch das Messelement 3 zu zeigen. Eine Querschnittsansicht des Magnetfeldelements 2 wird insbesondere in Figur 2 gezeigt. Hierbei ist das Magnetfeldelement 2 beispielhaft als ein Elektromagnet ausgebildet, wobei der Elektromagnet einen im Wesentlichen U-förmigen Magnetkern und eine an dem Magnetkern angeordnete Spule aufweist. Der Elektromagnet ist jedoch nicht auf eine solche Ausbildung beschränkt. Alternativ kann das Magnetelement 2 beispielsweise als ein Permanentmagnet ausgebildet sein.

**EP 3 894 817 B1**

Figur 2 zeigt eine Querschnittsansicht der in Figur 1 gezeigten exemplarischen Sensorvorrichtung entlang einer Schnittebene senkrecht zu der Drehachse **A** durch das Messelement **3**, das Magnetfeldelement **2**, die ferromagnetischen Elemente **4** und die Drehmoment-Übertragungseinrichtung **1**. Hierbei wird die paarweise Anordnung der ferromagnetischen Elemente **4** und eine Ausbildung des Magnetfeldelements **2**, wie bereits für Figur 1 oben beschrieben, deutlicher gezeigt. Insbesondere wird ein ferromagnetisches Element **4** in der Messposition gezeigt.

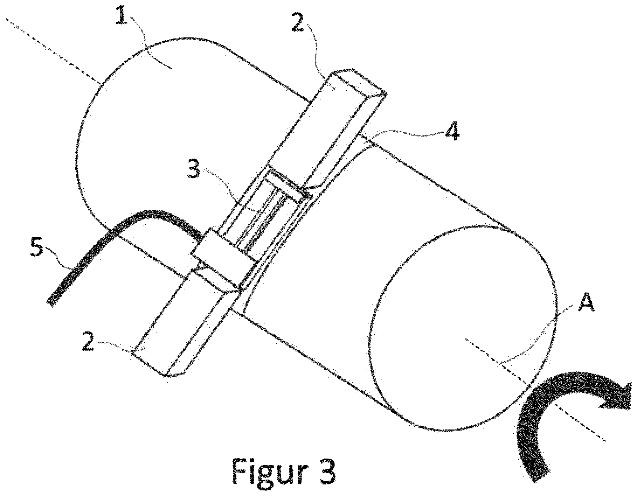

**Figur 3** zeigt eine perspektivische Ansicht einer zweiten exemplarischen Ausführungsform einer Sensorvorrichtung. Hierbei entsprechen das Magnetfeldelement **2**, das Verbindungselement **5**, das Messelement **3** und die Drehmoment-Übertragungseinrichtung **1** mit der Drehachse **A** im Wesentlichen den mit den gleichen Bezugszeichen gekennzeichneten Elementen in Figur 1 und 2.

Ein umlaufendes ferromagnetisches Element **4** ist an der Drehmoment-Übertragungseinrichtung **1** angeordnet, welches die Drehmoment-Übertragungseinrichtung **1** entlang einer umlaufenden Richtung bezüglich der Drehachse **A** vollständig umgibt. Hierdurch kann die Bildung einer Unwucht der Drehmoment-Übertragungseinrichtung **1** bezüglich einer Drehbewegung um die Drehachse **A** vermieden werden. Ferner umfasst das umlaufende ferromagnetische Element **4** insbesondere mindestens ein ferromagnetisches, insbesondere ein weichmagnetisches ferromagnetisches Material.

Das umlaufende ferromagnetische Element **4** weist einen im Wesentlichen konstanten Durchmesser entlang einer Richtung parallel zu der Drehachse **A** auf. Insbesondere kann die Drehmoment-Übertragungseinrichtung **1** eine korrespondierende Aussparung auf einer umlaufenden Oberfläche der Drehmoment-Übertragungseinrichtung **1** aufweisen, wobei das umlaufende ferromagnetische Element **4** in der korrespondierenden Aussparung aufgenommen ist.

Durch ein Anlegen eines Drehmoments an die Drehmoment-Übertragungseinrichtung **1** erfährt das umlaufende ferromagnetische Element **4** eine mechanische Spannung. Hierdurch wird eine magnetische Anisotropie bzw. ein magnetisches Anisotropiefeld in einem Abschnitt des umlaufenden ferromagnetischen Elements 4 entlang einer bezüglich der Drehachse **A** umlaufenden Fläche des ferromagnetischen Elements **4** gestört bzw. verändert, wodurch die ferromagnetische Resonanzfrequenz des umlaufenden ferromagnetischen Elements **4** verschoben wird.

Das Magnetfeldelement **2** ist vorzugsweise ausgelegt, in dem Betriebszustand ein Magnetfeld insbesondere zwischen dem Messelement **3** und der Drehmoment-Übertragungseinrichtung **1** zu erzeugen. Während einer Drehbewegung der Drehmoment-Übertragungseinrichtung **1** rotieren Abschnitte des umlaufenden ferromagnetischen Elements **4** zumindest teilweise durch eine Messposition zwischen dem Messelement **3** und der Drehmoment-Übertragungseinrichtung **1**, wobei das Magnetfeldelement **2** ausgelegt ist, in einem in der Messposition befindlichen jeweiligen Abschnitt des umlaufenden ferromagnetischen Elements **4** eine magnetische Anisotropie zu erzeugen oder zu beeinflussen. Hierdurch kann das Magnetfeldelement **2** die magnetische Anisotropie eines jeweiligen Abschnitts des umlaufenden ferromagnetischen Elements **4**, insbesondere während einer Messung der ferromagnetischen Resonanzfrequenz des umlaufenden ferromagnetischen Elements **4** erzeugen bzw. beeinflussen.

Wie auch in Figur **1** wird in Figur 3 das Magnetfeldelement **2** nur teilweise gezeigt, um auch das Messelement **3** zu zeigen. Eine Querschnittsansicht des Magnetfeldelements **2** wird in **Figur 4** gezeigt. Hierbei ist das Magnetfeldelement **2** beispielhaft als ein Elektromagnet ausgebildet, wobei der Elektromagnet einen im Wesentlichen U-förmigen Magnetkern und eine an dem Magnetkern angeordnete Spule aufweist. Der Elektromagnet ist jedoch nicht auf eine solche Ausbildung beschränkt. Alternativ kann das Magnetelement **2** beispielsweise als ein Permanentmagnet ausgebildet sein.

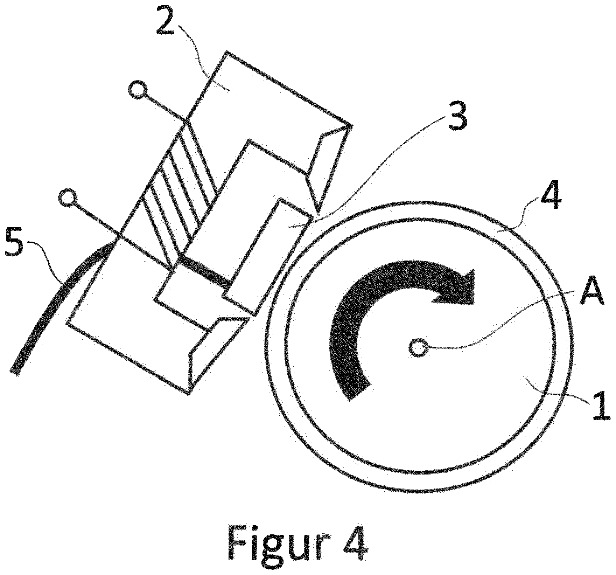

Figur 4 zeigt eine Querschnittsansicht der in Figur 3 gezeigten exemplarischen Sensorvorrichtung entlang einer Schnittebene senkrecht zu der Drehachse **A** durch das Messelement **3**, das Magnetfeldelement **2**, das umlaufende ferromagnetische Element **4** und die Drehmoment-Übertragungseinrichtung **1**. Hierbei wird die umlaufende Anordnung des umlaufenden ferromagnetischen Elements **4** und eine Ausbildung des Magnetfeldelements **2**, wie bereits für Figur 3 oben beschrieben, deutlicher gezeigt. Insbesondere wird gezeigt, dass bei jeder Drehbewegung der Drehmoment-Übertragungseinrichtung **1** um die Drehachse **A** ein Abschnitt des umlaufenden ferromagnetischen Elements **4** in der Messposition angeordnet ist.

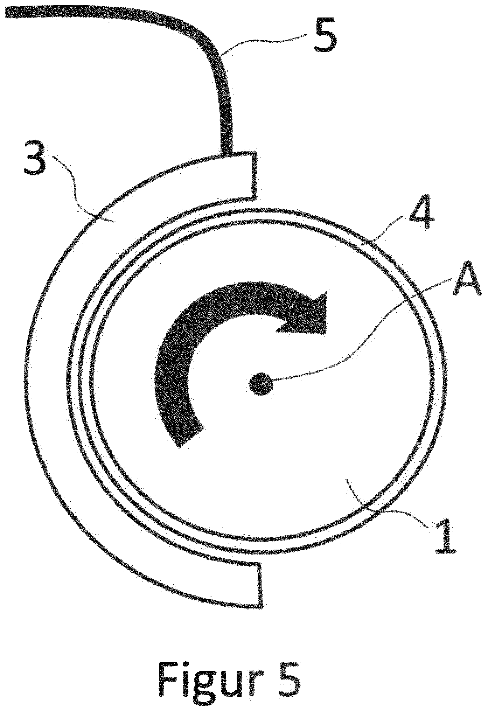

**Figur 5** zeigt eine Querschnittsansicht einer dritten exemplarischen Ausführungsform einer Sensorvorrichtung. Hierbei entsprechen die Drehmoment-Übertragungseinrichtung **1** mit der Drehachse **A**, das umlaufende ferromagnetische Element **4** und das Verbindungselement **5** im Wesentlichen den mit den gleichen Bezugszeichen gekennzeichneten Elementen in Figur 3 und 4.

Durch ein Anlegen eines Drehmoments an die Drehmoment-Übertragungseinrichtung **1** erfährt das umlaufende ferromagnetische Element **4** eine mechanische Spannung. Hierdurch wird eine magnetische Anisotropie bzw. ein magnetisches Anisotropiefeld in einem Abschnitt des umlaufenden ferromagnetischen Elements **4** entlang einer bezüglich der Drehachse **A** umlaufenden Fläche des ferromagnetischen Elements **4** gestört bzw. verändert, wodurch die ferromagnetische Resonanzfrequenz des umlaufenden ferromagnetischen Elements **4** verschoben wird.

Diese Verschiebung der ferromagnetischen Resonanzfrequenz des umlaufenden ferromagnetischen Elements **4** wird durch ein Messelement **3** einer Messeinrichtung gemessen. Das Messelement **3** ist vorzugsweise derart über der Drehmoment-Übertragungseinrichtung **1** angeordnet, dass sich Abschnitte des umlaufenden ferromagnetischen Elements **4** bei einer Drehbewegung der Drehmoment-Übertragungseinrichtung **1** zumindest teilweise zwischen der Drehachse **A** und dem Messelement **3** hindurchdrehen bzw. in umlaufender Richtung um die Drehachse **A** hindurchbewegen.

Ferner ist das Messelement **3** als ein umlaufendes Messelement **3** ausgebildet und ausgelegt, die Drehmoment-Übertragungseinrichtung **1** zumindest teilweise entlang einer bezüglich der Drehachse **A** umlaufenden Richtung zu umgeben. Insbesondere umgibt das umlaufende Messelement **3** die Drehmoment-Übertragungseinrichtung **1** entlang der umlaufenden Richtung zu im Wesentlichen etwa 50%. Das umlaufende Messelement 3 ist jedoch nicht auf die etwa 50% beschränkt, sondern kann die Drehmoment-Übertragungseinrichtung **1** entlang der umlaufenden Richtung zu im Wesentlichen weniger oder mehr als 50% umgeben. Ferner ist das umlaufende Messelement **3** derart ausgebildet, dass in dem Betriebszustand ein bezüglich der Drehachse **A** radialer Abstand zwischen dem umlaufenden Messelement **3** und dem umlaufenden ferromagnetischen Element **4** im Wesentlichen konstant ist.

Das umlaufende Messelement **3** ist kann beispielsweise als Hochfrequenz-Triplate-Stripline, insbesondere als gekrümmte Hochfrequenz-Triplate-Stripline ausgebildet sein.

Das umlaufende Messelement **3** der Messeinrichtung kann entweder direkt basierend auf der gemessenen Verschiebung der ferromagnetischen Resonanzfrequenz bzw. auf der gemessenen ferromagnetischen Resonanzfrequenz ein an die Drehmoment-Übertragungseinrichtung **1** angelegtes Drehmoment bestimmen, oder gemessene Daten der Verschiebung der ferromagnetischen Resonanzfrequenz bzw. der ferromagnetischen Resonanzfrequenz weiterleiten. Hierbei kann das Messelement **3** mit dem Verbindungselement **5** verbunden sein. Das Verbindungselement **5** kann vorzugsweiseausgelegt sein, Daten und/oder Strom zu übertragen. Ferner können Steuersignale an das Messelement **3** bzw. die Messeinrichtung durch das Verbindungselement **5** übermittelt werden.

Aufgrund der Ausbildung des Messelements **3** als umlaufendes Messelement **3** ist eine Erzeugung eines externen Magnetfeldes mittels eines Magnetfeldelements **2** nicht oder nur schwer möglich. Eine Messung der Verschiebung der ferromagnetischen Resonanzfrequenz bzw. der ferromagnetischen Resonanzfrequenz kann durch das umlaufende Messelement **3** beispielsweise basierend auf einer durch das angelegte Drehmoment erzeugten Formanisotropie in dem umlaufenden ferromagnetischen Element **4** erfolgen. Das umlaufende ferromagnetische Element **4** kann vorzugsweise eine geringe Breite, gemessen entlang einer Richtung parallel zu der Drehachse **A** aufweisen. Insbesondere kann die Breite des umlaufenden ferromagnetischen Elements **4** einen kleineren Wert als eine Breite des umlaufenden Messelements **3,** gemessen entlang einer Richtung parallel zu der Drehachse **A** aufweisen. Beispielsweise kann die Breite des umlaufenden ferromagnetischen Elements 4 einen Wert von maximal 90%, bevorzugt maximal 80%, weiter bevorzugt maximal 50% und/oder mindestens 10%, bevorzugt mindestens 20% des Wertes der Breite des umlaufenden Messelements **3** aufweisen.

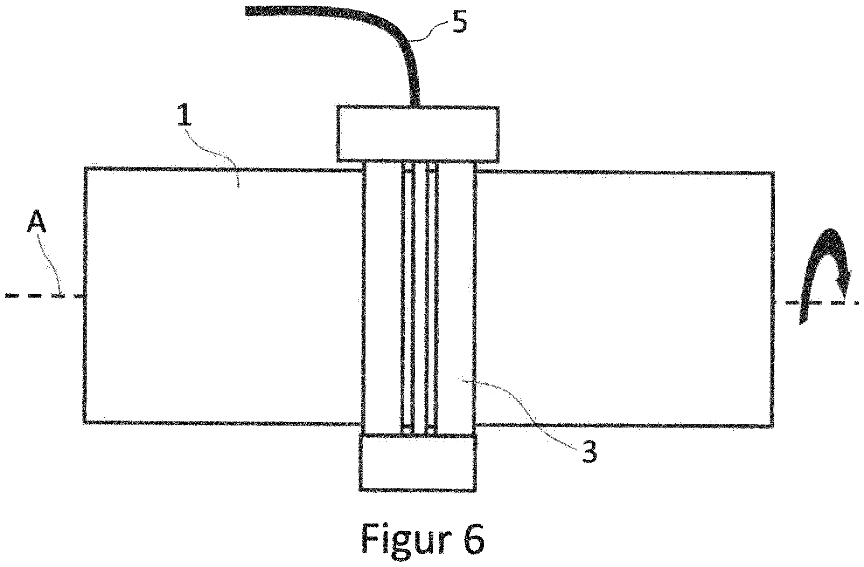

**Figur 6** zeigt eine Seitenansicht der in Figur 5 gezeigten exemplarischen Ausführungsform, wobei insbesondere eine relative Ausbildung des umlaufenden ferromagnetischen Elements **4** und des umlaufenden Messelements **3,** wie für Figur 5 oben beschrieben, dargestellt ist.

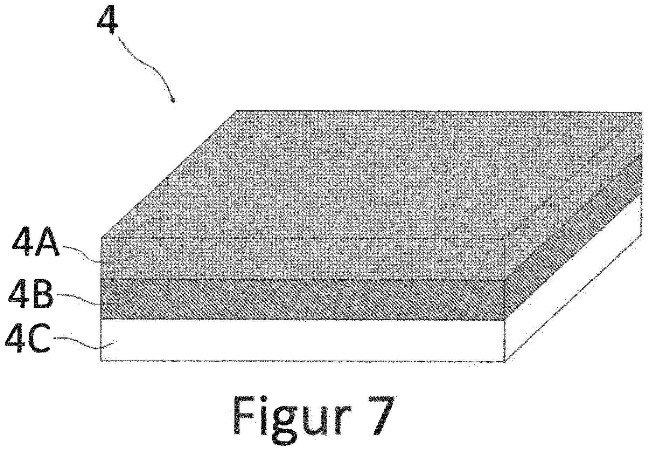

**Figur 7** zeigt eine perspektivische Querschnittsansicht eines exemplarischen ferromagnetischen Elements **4.** Das ferromagnetische Element **4** ist als im Wesentlichen planar bzw. eben dargestellt, wobei diese Geometrie nicht beschränkend ist. Vielmehr kann das ferromagnetische Element **4** eine andere Form, beispielsweise eine gekrümmte Form aufweisen.

Das ferromagnetische Element **4** ist insbesondere quaderförmig mit einer quadratischen Grundfläche dargestellt.

Das ferromagnetische Element **4** weist eine ferromagnetische Schicht **4A** auf. Die ferromagnetische Schicht **4A** weist eine magnetische Anisotropie bzw. ein magnetisches Anisotropiefeld in bzw. parallel zu der Ebene des ferromagnetischen Elements **4** auf. Die Ebene des ferromagnetischen Elements 4 ist hierbei eine Ebene, welche parallel zu zumindest der ferromagnetischen Schicht **4A** ist. Alternativ oder zusätzlich kann die ferromagnetische Schicht **4A** derart ausgebildet sein, dass eine magnetische Anisotropie bzw. ein magnetisches Anisotropiefeld in bzw. parallel zu der Ebene des ferromagnetischen Elements **4** durch ein externes Magnetfeld erzeugt werden kann.

Die ferromagnetische Schicht **4A** umfasst mindestens ein ferromagnetisches Material, vorzugsweise mindestens ein weichmagnetisches ferromagnetisches Material. Das mindestens eine ferromagnetische Material kann insbesondere auf Fe-Co-Hf-N, Fe-Co-Zr-N, Fe-Co-Ta-N, Fe-Co-B und/oder Fe-Co-B-Si basierende Materialien umfassen. Ferner können hochmagnetostriktive Seltene-Erd-Elemente (z.B. Tb, Dy, Sm) als Legierungszusatz eine Dämpfung der ferromagnetischen Resonanz der ferromagnetischen Schicht **4A** bzw. des mindestens einen ferromagnetischen Elements **4** erhöhen.

Das ferromagnetische Element **4** weist ferner eine Zwischenschicht **4B** auf, welche zwischen der ferromagnetischen Schicht **4A** und einem Substrat **4C** und/oder der Drehmoment-Übertragungseinrichtung **1** angeordnet ist. Die Zwischenschicht **4B** ist ausgelegt, die ferromagnetische Schicht **4A** von dem Substrat **4C** und/oder der Drehmoment-Übertragungseinrichtung **1** zu isolieren und/oder magnetisch zu entkoppeln. Vorzugsweise weist die Zwischenschicht **4B** entlang der Ebene des ferromagnetischen Elements **4** im Wesentlichen die gleichen Dimensionen bzw. Ausmaße wie die ferromagnetische Schicht **4A** auf, wodurch eine gleichmäßige magnetische Entkopplung ermöglicht wird. Die Zwischenschicht **4B** ist jedoch nicht auf solche Ausmaße beschränkt, sondern kann beispielsweise zumindest teilweise größere Ausmaße als die ferromagnetische Schicht **4A** aufweisen, wodurch magnetische Randeffekte entlang eines Randes der ferromagnetischen Schicht **4A** vermieden bzw. reduziert werden können.

Ferner kann die Zwischenschicht **4B** ausgebildet sein, um die ferromagnetische Schicht **4A** chemisch und/oder physikalisch von dem Substrat **4C** und/oder der Drehmoment-Übertragungseinrichtung **1** zu isolieren. Hierdurch können beispielsweise chemische Reaktionen und/oder Diffusionsvorgänge zwischen der ferromagnetischen Schicht **4A** und dem Substrat **4C** und/oder der Drehmoment-Übertragungseinrichtung **1** vermieden bzw. reduziert werden. Ferner kann die Zwischenschicht **4B** insbesondere ausgebildet sein, um als Haftvermittler zwischen der ferromagnetischen Schicht **4A** und dem Substrat **4C** zu wirken. Die Zwischenschicht **4B** kann hierbei insbesondere $Si_3N_4$ und/oder AlN und/oder Schichtmaterialien mit einem hohen spezifischen Widerstand (z.B. TiN und/oder Ti-Al-N und/oder TaN) umfassen.

Das ferromagnetische Element **4** weist ferner ein Substrat **4C** auf, welches zwischen der ferromagnetischen Schicht **4A** und der Drehmoment-Übertragungseinrichtung **1,** insbesondere zwischen der Zwischenschicht **4B** und der Drehmoment-Übertragungseinrichtung **1** angeordnet ist. Das Substrat **4C** kann hierbei insbesondere, wie oben beschrieben, als Trägerplättchen ausgebildet sein. Das Substrat **4C** kann insbesondere Glas bzw. Siliziumoxid, Silizium, Metalle, Kunststoffe und/oder Kompositmaterialien umfassen.

Das Substrat **4C** kann hierbei als eine Grundlage des ferromagnetischen Elements 4 während dessen Herstellungsprozesses ausgebildet sein, wobei eine Zwischenschicht **4B,** falls diese benötigt wird, und/oder die ferromagnetische Schicht **4A** auf dem Substrat **4C** aufgetragen werden.

Das Substrat **4C** kann ferner an einer der ferromagnetischen Schicht **4A** zugewandten Seite eine andere chemische Zusammensetzung aufweisen als an einer der ferromagnetischen Schicht **4A** abgewandten Seite. Beispielsweise kann das Substrat **4C** aus Silizium ausgebildet sein, wobei die der ferromagnetischen Schicht **4A** zugewandte Seite eine Siliziumoxidschicht aufweist. Die Siliziumoxidschicht kann vorzugsweise durch thermische Oxidation des Substrats **4C** erzeugt werden, wobei die Siliziumoxidschicht eine gleiche Funktion als die Zwischenschicht **4B** erfüllen kann. Daher kann in Abhängigkeit von dem verwendeten Substrat **4C** von der Verwendung bzw. von dem Vorsehen einer separaten Zwischenschicht **4B** abgesehen werden.

**Figur 8** zeigt eine schematische Darstellung eines Verspannens einer Drehmoment-Übertragungseinrichtung und eines daran angeordneten ferromagnetischen Elements. Hierbei wird insbesondere auf die obige Beschreibung verwiesen, insbesondere bezüglich Gleichungen (1) bis (12), worin der theoretische Hintergrund des Verspannens näher erläutert wird.

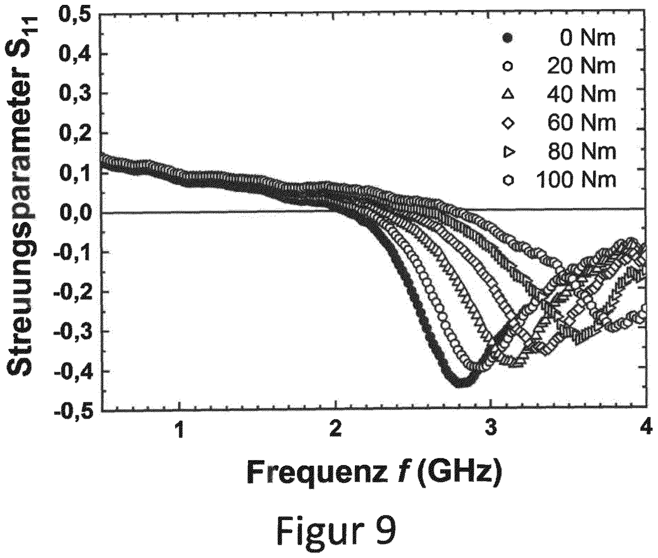

**Figur 9** zeigt sechs Messreihen der ferromagnetischen Resonanzfrequenz für das in Beispiel 2 hergestellte ferromagnetische Element, wobei die Ermittlung jeder Messreihe bei einem anderen angelegten Drehmoment an die Drehmoment-Übertragungseinrichtung erfolgt ist. Die ferromagnetische Resonanzfrequenz kann hierbei durch den $S_{11}$ Parameterverlauf (Minimum von $S_{11}$) der Messeinrichtung bzw. durch einen Imaginärteil (Lorentz-kurvenförmigen Resonanzpeakverlauf) der frequenzabhängigen Permeabilität bestimmt werden, welche anhand der $S_{11}$ Daten berechnet bzw. ausgewertet werden kann. Insbesondere ist zu erkennen, dass mit steigendem angelegten Drehmoment eine Verschiebung der ferromagnetischen Referenzfrequenz bewirkt wird.

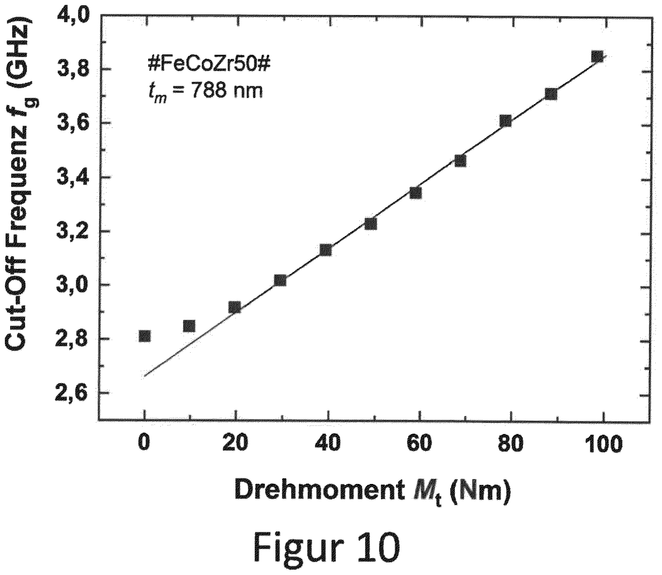

**Figur 10** zeigt eine graphische Darstellung einer ferromagnetischen cut-off Resonanzfrequenz der in Figur 9 gezeigten Messreihen. Hierbei ist zu erkennen, dass ab einem angelegten Drehmoment von ungefähr 20Nm die ferromagnetische cut-off Resonanzfrequenz im Wesentlichen linear mit steigendem angelegten Drehmoment ansteigt.

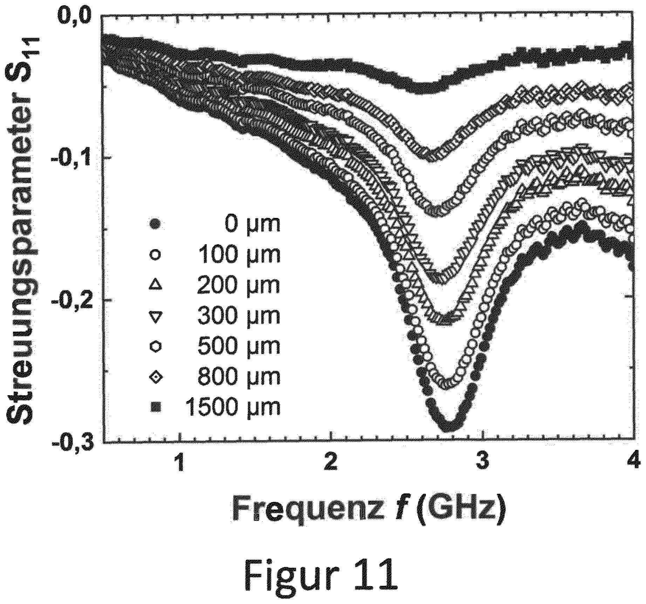

**Figur 11** zeigt eine graphische Darstellung einer Vielzahl von Messreihen des Streuungsparameters $S_{11}$ in Abhängigkeit von der Distanz zwischen einem Messelement und einem ferromagnetischen Element in der Messposition. Hierbei nimmt eine Signalstärke der gemessenen ferromagnetischen Resonanzfrequenz mit abnehmender Distanz zu.

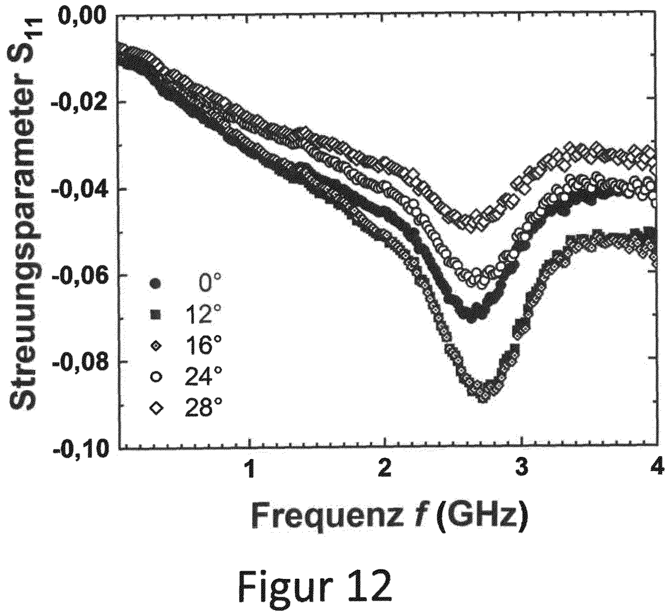

**Figur 12** zeigt eine graphische Darstellung eine Vielzahl von Messreihen der ferromagnetischen Resonanzfrequenz in Abhängigkeit von dem Messwinkel zwischen einem Messelement und einem ferromagnetischen Element in der Messposition. Hierbei ist insbesondere zu erkennen, dass eine maximale bzw. optimale Signalstärke der gemessenen ferromagnetischen Resonanz bei einem Messwinkel zwischen 12° und 16° erreicht wird.

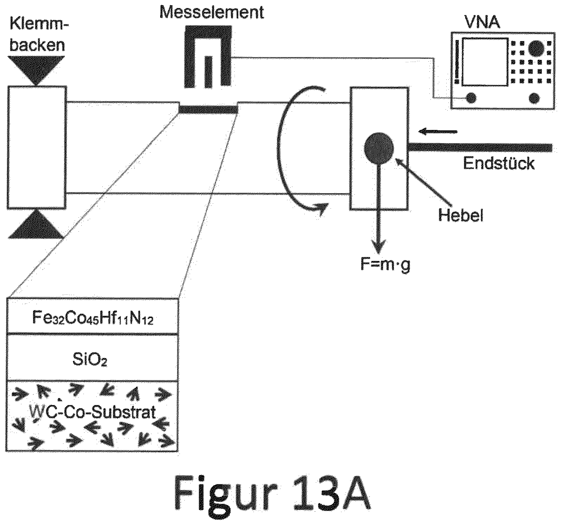

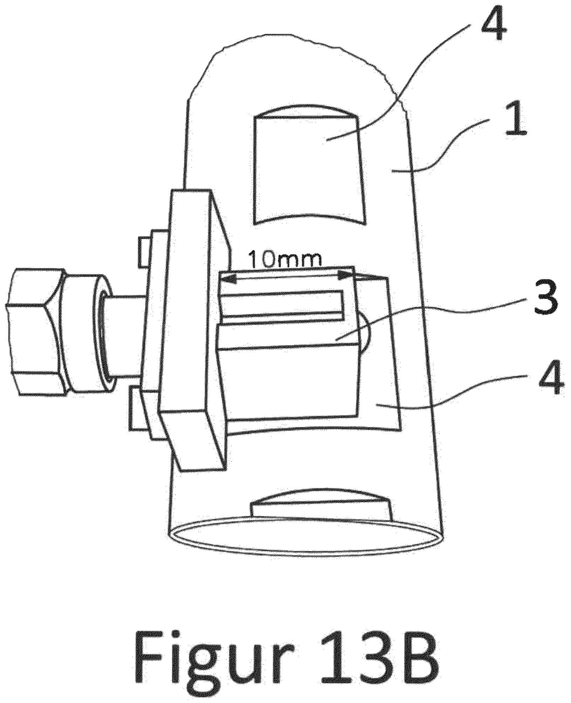

**Figuren 13A und 13B** zeigen eine beispielhafte experimentale Messeinrichtung zur Bestimmung einer ferromagnetischen Resonanzfrequenz, sowie eine Nahansicht der beispielhaften Sensorvorrichtung. Die Drehmoment-Übertragungseinrichtung 1 bzw. die Welle mit einer beispielhaften Sensorvorrichtung wird an einem Ende der Welle mittels Klemmbacken fixiert, während das andere Ende der Welle drehbar an einem Endstück gelagert wird. Mittels eines Hebels wird ein Drehmoment an die Welle angelegt, wobei das angelegte Drehmoment eine Verspannung des ferromagnetischen Elements **4** bewirkt. Über ein Messelement **3,** hierbei eine Hochfrequenz-Triplate-Stripline (siehe Figur 13B) wird die ferromagnetische Resonanzfrequenz bzw. die Verschiebung der ferromagnetischen Resonanzfrequenz mithilfe eines VNA (Vector Network Analyser) gemessen bzw. ermittelt. Das in Figur 13B gezeigte Messelement **3** kann insbesondere in einem Frequenzbereich von 50MHz bis 5GHz verwendet werden. Die Geometriemaße des Messelements **3,** beispielsweise der in Figur 13B gezeigten Hochfrequenz-Triplate-Stripline, richten sich insbesondere nach dessen Impedanz. Diese wurde für die Hochfrequenz-Triplate-Stripline aus Figur 13B insbesondere auf 50 Ohm eingestellt. Hieraus ergibt sich ein Abstand zwischen Ground-Platte und Signalleiteng der Hochfrequenz-Triplate-Stripline von 0.7 mm bei einer Länge der Hochfrequenz-Triplate-Stripline von 10 mm.

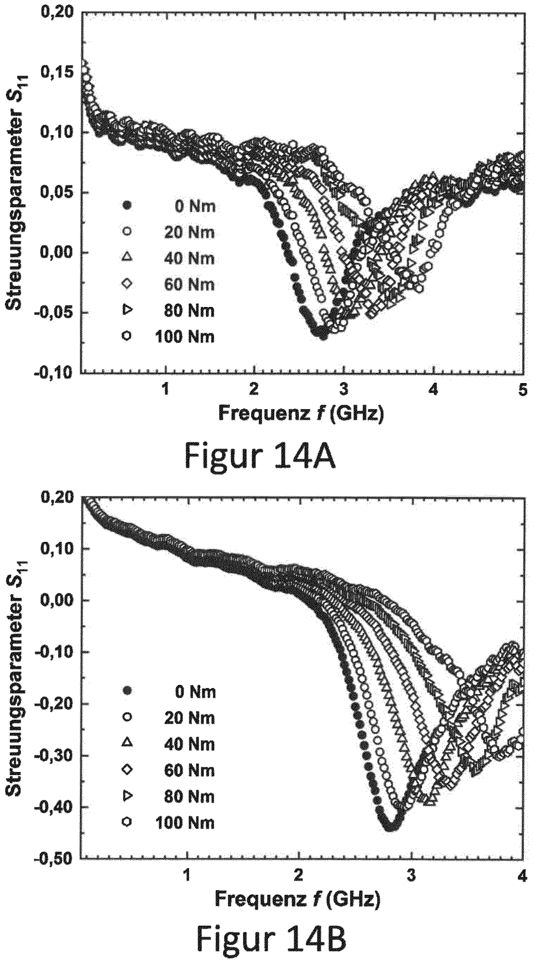

**Figur 14** zeigt einen Vergleich von Messreihen der ferromagnetischen Resonanzfrequenz. In Figur 14A sind Messreihen bei einem angelegten Drehmoment von jeweils 0Nm, 20Nm, 40Nm, 60Nm, 80Nm und 100Nm eines wie in Beispiel 1 hergestellten ferromagnetischen Elements dargestellt. In Figur 14B sind Messreihen bei einem angelegten Drehmoment von jeweils 0Nm, 20Nm, 40Nm, 60Nm, 80Nm und 100Nm eines wie in Beispiel 2 hergestellten ferromagnetischen Elements dargestellt. Die Messreihen des in Beispiel 2 hergestellten ferromagnetischen Elements sind erkennbar glatter bzw. weisen ein besseres Signal-Rausch Verhältnis auf und zeigen eine erhöhte Signalstärke im Vergleich zu den in Figur 14A gezeigten Messreihen. Dies ist insbesondere auf die größere Dicke des in Beispiel 2 hergestellten ferromagnetischen Elements, und daher auf dessen größeres magnetisches Volumen zurückzuführen.

**Figur 15** zeigt einen Vergleich der theoretischen Werte der ferromagnetischen Resonanzfrequenz auf Basis von Gleichung 13 mit Gleichung 12 (ferromagnetische Resonanzfrequenz ohne Berücksichtigung einer imperfekten Übertragung des Drehmoments durch die Verbindung zwischen dem ferromagnetischen Element und der Drehmoment-Übertragungseinrichtung) und von Gleichung 13 mit Gleichung 14 (ferromagnetische Resonanzfrequenz mit Berücksichtigung einer imperfekten Übertragung des Drehmoments durch die Verbindung zwischen dem ferromagnetischen Element und der Drehmoment-Übertragungseinrichtung). Ein Vergleich mit gemessenen Werten der ferromagnetischen Resonanzfrequenz der in Beispielen 1 und 2 hergestellten ferromagnetischen Elemente zeigt, dass eine theoretische ferromagnetische Resonanzfrequenz gemäß Gleichung (13) mit Gleichung (14) die gemessenen Werte besser wiedergibt als eine theoretische ferromagnetische Resonanzfrequenz gemäß Gleichung (13) mit Gleichung (12).

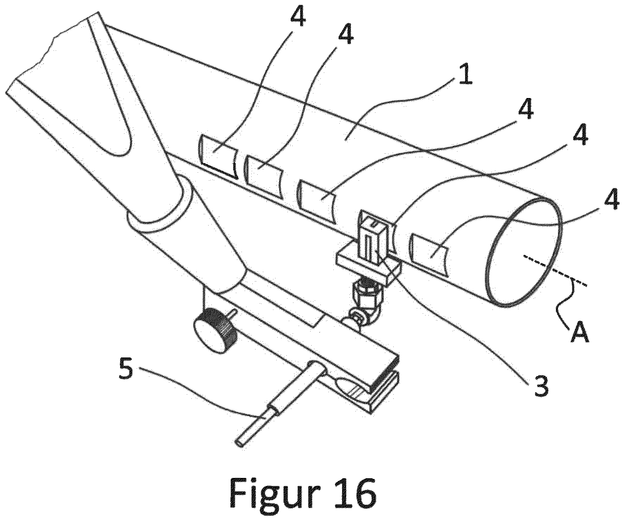

**Figur 16** zeigt eine schematische Darstellung einer beispielhaften Sensorvorrichtung an einer Welle. Figur 16 zeigt hierbei insbesondere eine Vielzahl von ferromagnetischen Elementen **4,** welche linear parallel zu der Drehachse **A** der Welle angeordnet sind. Die ferromagnetischen Elemente **4** können hierbei in gleichen oder unterschiedlichen Abständen zueinander angeordnet sein. Hierdurch kann beispielsweise die Sensorvorrichtung entlang der Welle verschoben werden, um die Messung der ferromagnetischen Resonanzfrequenz an einer Vielzahl von ferromagnetischen Elementen **4** zu ermöglichen. Insbesondere können hierdurch zusätzlich oder alternativ eine Vielzahl von Sensorvorrichtungen an der Welle angeordnet werden, um die ferromagnetische Resonanzfrequenz in einer Vielzahl der ferromagnetischen Elemente **4** zu ermitteln bzw. zu messen. Hierdurch kann beispielsweise mittels eines Vergleichs der gemessenen Werte eine Zuverlässigkeit des ermittelten Drehmoments erhöht werden, und/oder möglicherweise fehlerhafte ferromagnetische Elemente **4** und/oder möglicherweise fehlerhafte Messelemente **3** festzustellen und/oder zu identifizieren.

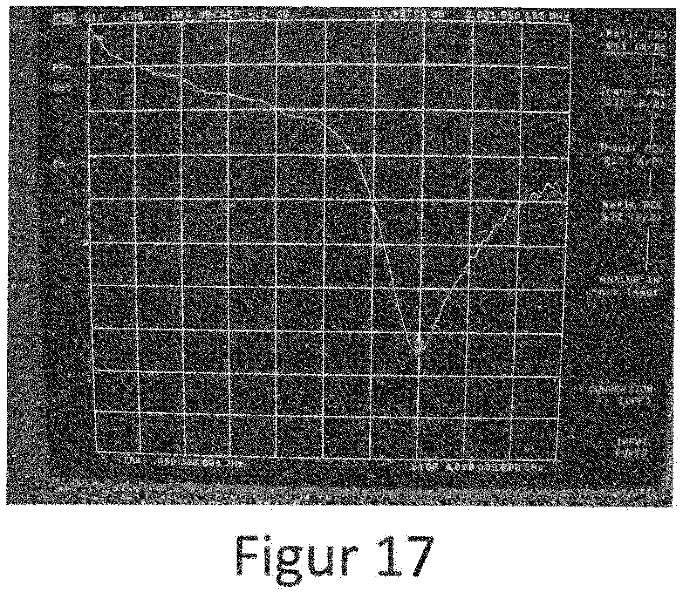

**Figur 17** zeigt einen Screenshot einer Messreihe der ferromagnetischen Resonanzfrequenz gemäß der in Figur 16 gezeigten beispielhaften Sensorvorrichtung.

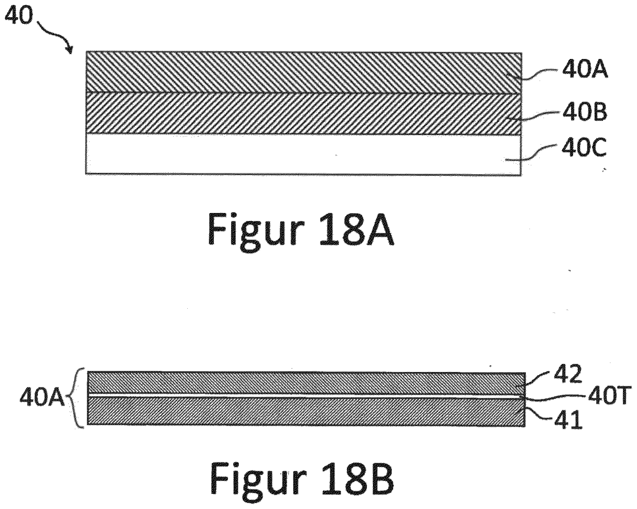

**Figur 18A** zeigt eine perspektivische Querschnittsansicht eines exemplarischen ferromagnetischen Elements **40.** Das ferromagnetische Element **40** ist schematisch als im Wesentlichen planar bzw. eben dargestellt, wobei diese Geometrie nicht beschränkend ist. Vielmehr kann das ferromagnetische Element **40** eine andere Form, beispielsweise eine gekrümmte Form aufweisen.

Das ferromagnetische Element **40** weist hierbei insbesondere zwei oder mehr ferromagnetische Schichten auf, welche hierbei in Figur 18A zusammenfassend als Element **40A** dargestellt sind und ferner in Figuren 18B bis 18D beschrieben werden. Die zwei oder mehr ferromagnetischen Schichten können jeweils eine magnetische Anisotropie bzw. ein magnetisches Anisotropiefeld in bzw. parallel zu der Ebene des ferromagnetischen Elements **40** aufweisen. Die Ebene des ferromagnetischen Elements **40** ist hierbei eine Ebene, welche parallel zu zumindest den zwei oder mehr ferromagnetischen Schichten ist. Alternativ oder zusätzlich können die zwei oder mehr ferromagnetischen Schichten derart ausgebildet sein, dass jeweils eine magnetische Anisotropie bzw. ein magnetisches Anisotropiefeld in bzw. parallel zu der Ebene des ferromagnetischen Elements **40** durch ein externes Magnetfeld erzeugt werden kann.

Das ferromagnetische Element **40** kann ferner eine Zwischenschicht **40B** aufweisen, welche zwischen den zwei oder mehr ferromagnetischen Schichten und einem Substrat **40C** und/oder der Drehmoment-Übertragungseinrichtung **1** angeordnet ist. Die Zwischenschicht **40B** ist ausgelegt, die zwei oder mehr ferromagnetischen Schichten **40A** von dem Substrat **40C** und/oder der Drehmoment-Übertragungseinrichtung **1** zu isolieren und/oder magnetisch zu entkoppeln. Die Zwischenschicht **40B** kann hierbei insbesondere eine beliebige Kombination der Merkmale der Zwischenschicht **4B** aufweisen. Die Zwischenschicht **40B,** wie auch Zwischenschicht **4B,** sind jedoch optional, und können beispielsweise bei Drehmoment-Übertragungseinrichtungen **1,** welche nicht mit den zwei oder mehr ferromagnetischen Schichten magnetisch wechselwirken können, bevorzugt nicht vorgesehen werden.

Das ferromagnetische Element **40** weist ferner ein Substrat **40C** auf, welches zwischen den zwei oder mehr ferromagnetischen Schichten und der Drehmoment-Übertragungseinrichtung **1,** insbesondere zwischen der Zwischenschicht **40B** und der Drehmoment-Übertragungseinrichtung **1** angeordnet ist. Das Substrat **40C** kann hierbei insbesondere eine beliebige Kombination der Merkmale des Substrats **4C** aufweisen.

**Figur 18B** zeigt eine perspektivische Querschnittsansicht eines exemplarischen Elements **40A** des ferromagnetischen Elements **40,** umfassend zwei ferromagnetische Schichten **41, 42.**

Element **40A** weist hierbei insbesondere mindestens eine erste ferromagnetische Schicht **41** auf. Die erste ferromagnetische Schicht **41** kann hierbei insbesondere aus mindestens einem ersten ferromagnetischen Material ausgebildet sein. Element **40A** weist hierbei ferner insbesondere mindestens eine zweite ferromagnetische Schicht **42** auf. Die zweite ferromagnetische Schicht **42** kann hierbei insbesondere aus mindestens einem zweiten ferromagnetischen Material ausgebildet sein.

Ferner ist die erste ferromagnetische Schicht **41** durch mindestens eine isolierende, nichtleitende Trennschicht **40T** von der zweiten ferromagnetischen Schicht **42** getrennt. Die isolierende, nichtleitende Trennschicht **40T** ist hierbei insbesondere ausgelegt, um die erste ferromagnetische Schicht **41** und die zweite ferromagnetische Schicht **42** magnetisch voneinander zu entkoppeln bzw. eine magnetische Wechselwirkung zwischen der ersten ferromagnetischen Schicht **41** und der zweiten ferromagnetischen Schicht **42** zu verhindern bzw. zu reduzieren. Insbesondere weist die erste ferromagnetische Schicht **41** somit eine erste ferromagnetische Resonanzfrequenz und die zweite ferromagnetische Schicht **42** eine zweite ferromagnetische Resonanzfrequenz auf, welche durch das mindestens eine Messelement **3** gemessen bzw. ermittelt werden können.

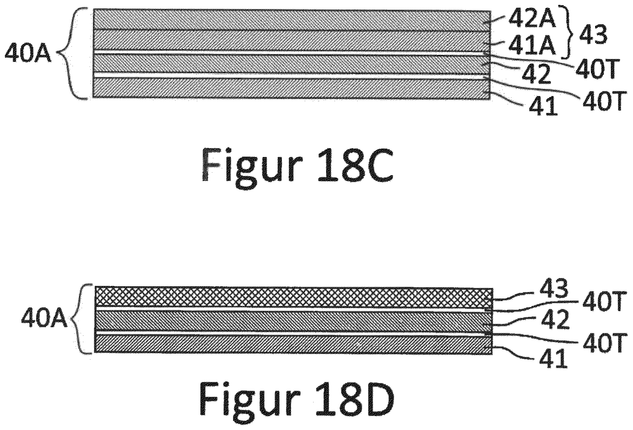

**Figur 18C** zeigt eine perspektivische Querschnittsansicht eines weiteren exemplarischen Elements **40A** des ferromagnetischen Elements **40,** umfassend drei ferromagnetische Schichten **41, 42, 43.**

Insbesondere weist das Element **40A** mindestens eine erste ferromagnetische Schicht **41,** eine zweite ferromagnetische Schicht **42** und eine dritte ferromagnetische Schicht **43,** und mindestens zwei isolierende, nichtleitende Trennschichten **40T** auf. Hierbei ist insbesondere eine erste der mindestens zwei isolierenden, nichtleitenden Trennschichten **40T** zwischen der ersten ferromagnetischen Schicht **41** und der zweiten ferromagnetischen Schicht **42** angeordnet. Ferner ist insbesondere eine zweite der mindestens zwei isolierenden, nichtleitenden Trennschichten **40T** zwischen der zweiten ferromagnetischen Schicht **42** und der dritten ferromagnetischen Schicht **43** angeordnet. Insbesondere ist die zweite ferromagnetische Schicht **42** zwischen der ersten ferromagnetischen Schicht **41** und der dritten ferromagnetischen Schicht **43** angeordnet. Eine solche Reihenfolge der zwei oder mehr, in diesem Fall drei, ferromagnetischen Schichten ist jedoch nicht als beschränkend anzusehen. Vielmehr kann eine beliebige Reihenfolge der zwei oder mehr ferromagnetischen Schichten vorgesehen werden, und kann beispielsweise basierend auf den jeweiligen Materialien der zwei oder mehr ferromagnetischen Schichten vorgesehen werden.

Die erste ferromagnetische Schicht **41** ist hierbei insbesondere aus mindestens einem ersten ferromagnetischen Material ausgebildet. Die zweite ferromagnetische Schicht **42** ist hierbei insbesondere aus mindestens einem zweiten ferromagnetischen Material ausgebildet. Hierdurch weisen die erste ferromagnetische Schicht **41** eine erste ferromagnetische Resonanzfrequenz und die zweite ferromagnetische Schicht **42** eine zweite ferromagnetische Resonanzfrequenz auf.

Insbesondere ist hierbei die dritte ferromagnetische Schicht **43** als eine Mehrfachschicht ausgebildet. Die Mehrfachschicht umfasst hierbei mindestens eine erste Unterschicht **41A** aus dem ersten ferromagnetischen Material und mindestens eine zweite Unterschicht **42A** aus dem zweiten ferromagnetischen Material, welche direkt aufeinander aufgetragen bzw. angeordnet sind. Hierbei ist keine weitere isolierende, nichtleitende Trennschicht **40T** zwischen der ersten Unterschicht **41A** und der zweiten Unterschicht **42A** angeordnet, wodurch die erste Unterschicht **41A** und die zweite Unterschicht **42A** nicht magnetisch voneinander entkoppelt sind bzw. eine magnetische Wechselwirkung zwischen der ersten Unterschicht **41A** und der zweiten Unterschicht **42A** möglich ist. Hierdurch hat die Mehrfachschicht eine dritte ferromagnetische Resonanzfrequenz zwischen der ersten ferromagnetischen Resonanzfrequenz der ersten ferromagnetischen Schicht **41** und der zweiten ferromagnetischen Resonanzfrequenz der zweiten ferromagnetischen Schicht **42.**

Die Reihenfolge der mindestens zwei Unterschichten **41A, 42A** ist hierbei nur exemplarisch dargestellt. Insbesondere kann jede Reihenfolge der mindestens zwei Unterschichten **41A, 42A** frei gewählt werden, beispielsweise unter Berücksichtigung der ersten ferromagnetischen Schicht **41** und der zweiten ferromagnetischen Schicht **42.** Ferner kann die Mehrfachschicht beispielsweise zwei oder mehr Unterschichten, insbesondere mehr als zwei Unterschichten aufweisen.

Insbesondere weisen die erste ferromagnetische Schicht **41** eine erste ferromagnetische Resonanzfrequenz, die zweite ferromagnetische Schicht **42** eine zweite ferromagnetische Resonanzfrequenz, und die dritte ferromagnetische Schicht **43** eine dritte ferromagnetische Resonanzfrequenz auf, welche durch das mindestens eine Messelement **3** gemessen bzw. ermittelt werden können.

**Figur 18D** zeigt eine perspektivische Querschnittsansicht eines weiteren exemplarischen Elements **40A** des ferromagnetischen Elements **40,** umfassend drei ferromagnetische Schichten **41, 42, 43.**

Insbesondere weist das Element **40A** mindestens eine erste ferromagnetische Schicht **41,** eine zweite ferromagnetische Schicht **42** und eine dritte ferromagnetische Schicht **43,** und mindestens zwei isolierende, nichtleitende Trennschichten **40T** auf. Hierbei ist insbesondere eine erste der mindestens zwei isolierenden, nichtleitenden Trennschichten **40T** zwischen der ersten ferromagnetischen Schicht **41** und der zweiten ferromagnetischen Schicht **42** angeordnet. Ferner ist insbesondere eine zweite der mindestens zwei isolierenden, nichtleitenden Trennschichten **40T** zwischen der zweiten ferromagnetischen Schicht **42** und der dritten ferromagnetischen Schicht **43** angeordnet. Insbesondere ist die zweite ferromagnetische Schicht **42** zwischen der ersten ferromagnetischen Schicht **41** und der dritten ferromagnetischen Schicht **43** angeordnet.

Die erste ferromagnetische Schicht **41** ist hierbei insbesondere aus mindestens einem ersten ferromagnetischen Material ausgebildet. Die zweite ferromagnetische Schicht **42** ist hierbei insbesondere aus mindestens einem zweiten ferromagnetischen Material ausgebildet. Die dritte ferromagnetische Schicht **43** ist hierbei insbesondere aus mindestens einem dritten ferromagnetischen Material ausgebildet. Insbesondere weisen hierdurch die erste ferromagnetische Schicht **41** eine erste ferromagnetische Resonanzfrequenz, die zweite ferromagnetische Schicht **42** eine zweite ferromagnetische Resonanzfrequenz, und die dritte ferromagnetische Schicht **43** eine dritte ferromagnetische Resonanzfrequenz auf, welche durch das mindestens eine Messelement **3** gemessen bzw. ermittelt werden können.

Die in der Beschreibung und in den Figuren erläuterten und dargestellten exemplarischen Ausführungsformen sind nicht als beschränkend zu interpretieren. Vielmehr kann eine Sensorvorrichtung und/oder ein Verfahren eine beliebige Kombination aus den in der Beschreibung genannten und den in den Figuren gezeigten Merkmalen aufweisen. Der Gegenstand, für den Schutz begehrt wird, wird in den Patentansprüchen angegeben.

**Bezugszeichenliste**

| | |
|---|---|
| **1** | Drehmoment-Übertragungseinrichtung |
| **2** | Magnetfeldelement |
| **3** | Messelement |
| **4** | Ferromagnetisches Element |
| **4A** | Ferromagnetische Schicht |
| **40A** | Element |
| **41** | Erste ferromagnetische Schicht |
| **42** | Zweite ferromagnetische Schicht |
| **43** | Dritte ferromagnetische Schicht |
| **4B, 40B** | Zwischenschicht |
| **4C, 40C** | Substrat |
| **40T** | Isolierende, nichtleitende Trennschicht |
| **41A, 42A** | Unterschicht |
| **5** | Verbindungselement |
| **A** | Drehachse einer Drehmoment-Übertragungseinrichtung |

**Patentansprüche**

1. Sensorvorrichtung, umfassend:

   mindestens ein ferromagnetisches Element (4), welches in einem Betriebszustand an einer Drehmoment-Übertragungseinrichtung (1) anordenbar ist; und
   eine Messeinrichtung, umfassend mindestens ein Messelement (3), wobei jedes Messelement (3) ausgelegt ist, eine ferromagnetische Resonanzfrequenz zumindest eines ferromagnetischen Elements (4) zu messen, wobei die Messeinrichtung ausgelegt ist, ein Drehmoment der Drehmoment-Übertragungseinrichtung (1) basierend auf einer Verschiebung der gemessenen ferromagnetischen Resonanzfrequenz zu bestimmen, wobei das mindestens eine ferromagnetische Element (4) mindestens eine ferromagnetische Schicht (4A) aufweist, und wobei mindestens ein Messelement (3) des mindestens einen Messelements (3) als Hochfrequenz-Triplate-Stripline ausgebildet ist.

2. Sensorvorrichtung nach Anspruch 1, wobei das mindestens eine ferromagnetische Element (4) mindestens eine erste ferromagnetische Schicht (41) und eine zweite ferromagnetische Schicht (42) aufweist, und wobei das mindestens eine ferromagnetische Element (4) mindestens eine isolierende, nichtleitende Trennschicht (40T) aufweist, welche zwischen der ersten ferromagnetischen Schicht (41) und der zweiten ferromagnetischen Schicht (42) angeordnet ist, und ausgelegt ist, um die erste ferromagnetische Schicht (41) und die zweite ferromagnetische Schicht (42) magnetisch voneinander zu entkoppeln.

3. Sensorvorrichtung nach Anspruch 1 oder 2, wobei jede der mindestens einen ferromagnetischen Schicht (4A) jeweils eine Dicke von maximal etwa 500 $\mu$m, bevorzugt maximal etwa 1 $\mu$m und/oder minimal etwa 50 nm, bevorzugt minimal etwa 150 nm aufweist; und/oder

wobei die Dicke der jeweiligen mindestens einen ferromagnetischen Schicht (4A) und/oder eine Dicke des mindestens einen ferromagnetischen Elements (4) im Wesentlichen konstant sind; und/oder
wobei das mindestens eine ferromagnetische Element (4) mindestens ein Substrat (4C) aufweist, welches in dem Betriebszustand zwischen der mindestens einen ferromagnetischen Schicht (4A) und der Drehmoment-Übertragungseinrichtung (1) angeordnet ist.

4. Sensorvorrichtung nach einem der Ansprüche 1 bis 3, wobei das mindestens eine ferromagnetische Element (4) mindestens eine Zwischenschicht (4B) aufweist, welche in dem Betriebszustand zwischen der mindestens einen ferromagnetischen Schicht (4A) und der Drehmoment-Übertragungseinrichtung (1) angeordnet ist,

wobei die mindestens eine Zwischenschicht (4B) ausgelegt ist, um in dem Betriebszustand die mindestens eine ferromagnetische Schicht (4A) und die Drehmoment-Übertragungseinrichtung (1) magnetisch zu entkoppeln, und, optional,
wobei die mindestens eine Zwischenschicht (4B) eine Dicke von maximal etwa 500 $\mu$m, bevorzugt maximal etwa 5 $\mu$m und/oder minimal etwa 200 nm, bevorzugt minimal etwa 750 nm aufweist.

5. Sensorvorrichtung nach einem der Ansprüche 1 bis 4, wobei das mindestens eine ferromagnetische Element (4) in dem Betriebszustand durch Verkleben, Verschweißen, Verpressen, chemisches Reagieren und/oder Verrasten mit der Drehmoment-Übertragungseinrichtung (1) verbindbar ist, um eine durch das Drehmoment bewirkte mechanische Spannung von der Drehmoment-Übertragungseinrichtung (1) auf das mindestens eine ferromagnetische Element (4) zu übertragen, und, optional,
wobei die Messeinrichtung ausgelegt ist, das Drehmoment der Drehmoment-Übertragungseinrichtung (1) basierend auf einer Verschiebung der gemessenen ferromagnetischen Resonanzfrequenz zu bestimmen, wobei eine nicht perfekte Übertragung der mechanischen Spannung durch die Verbindung von der Drehmoment-Übertragungseinrichtung (1) und des mindestens einen ferromagnetische Elements (4) berücksichtigt ist, und, optional, wobei die Messeinrichtung ausgelegt ist, in einem Kalibrierungsschritt die nicht perfekte Übertragung der mechanischen Spannung durch die Verbindung von der Drehmoment-Übertragungseinrichtung (1) und des mindestens einen ferromagnetische Elements (4) zu bestimmen.

6. Sensorvorrichtung nach einem der vorangegangenen Ansprüche, wobei dass mindestens eine Messelement (3) ausgelegt ist, die ferromagnetische Resonanzfrequenz des mindestens einen ferromagnetischen Elements (4) mittels eines Frequenzsweeps zu messen bzw. zu ermitteln; und/oder

wobei in dem Betriebszustand ein kleinster Abstand zwischen mindestens einem Messelement (3) und mindestens einem ferromagnetischen Element (4) einen Wert von maximal etwa 1500 $\mu$m, bevorzugt maximal etwa 500 $\mu$m, ferner bevorzugt maximal etwa 300 $\mu$m, am meisten bevorzugt maximal etwa 150 $\mu$m aufweist; und/oder
wobei während einer Messung der ferromagnetischen Resonanzfrequenz zumindest eines ferromagnetischen Elements (4) ein Messwinkel zwischen einer Oberfläche des mindestens einen Messelements (3) und des mindestens einen ferromagnetischen Elements (4) einen Wert von mindestens etwa 0°, bevorzugt mindestens etwa 12° und maximal etwa 28°, bevorzugt maximal etwa 16° aufweist; und/oder
wobei die Drehmoment-Übertragungseinrichtung (1) als eine Welle ausgebildet ist.

7. Sensorvorrichtung nach einem der Ansprüche 1 bis 6,
wobei die Hochfrequenz-Triplate-Stripline ausgelegt ist, in einem Reflexionsmodus einer definiert geführten elektromagnetischen Hochfrequenz-Welle betrieben zu werden, und, optional,
wobei die Hochfrequenz-Triplate-Stripline ausgelegt ist, in dem Reflexionsmodus zur Messung der ferromagnetischen Resonanzfrequenz mindestens ein Reflexionssignal zu empfangen bzw. zu messen, wobei das mindestens eine Reflexionssignal bei einer festen Messfrequenz ermittelbar bzw. messbar ist.

8. Sensorvorrichtung nach einem der Ansprüche 1 bis 7, wobei das mindestens eine Messelement (3) im Betriebszustand im Wesentlichen entlang einer Messebene angeordnet ist, wobei die Messebene im Wesentlichen tangential zu einer Oberfläche der Drehmoment-Übertragungseinrichtung (1) ausgebildet ist; oder
wobei das mindestens eine Messelement (3) im Betriebszustand im Wesentlichen entlang einer umlaufenden Richtung bezüglich einer Drehachse der Drehmoment-Übertragungseinrichtung (1) die Drehmoment-Übertragungseinrichtung (1) zumindest teilweise umgibt.

9. Sensorvorrichtung nach einem der Ansprüche 1 bis 8, wobei das mindestens eine ferromagnetische Element (4) als mindestens ein umlaufendes ferromagnetisches Element (4) ausgebildet ist, wobei das mindestens eine umlaufende ferromagnetische Element (4) in dem Betriebszustand die Drehmoment-Übertragungseinrichtung (1) entlang einer umlaufenden Richtung bezüglich einer Drehachse der Drehmoment-Übertragungseinrichtung (1) im Wesentlichen vollständig umgibt; oder

wobei das mindestens eine ferromagnetische Element (4) mindestens zwei ferromagnetische Elemente (4) umfasst, wobei die mindestens zwei ferromagnetischen Elemente (4) in umlaufender Richtung bezüglich einer Drehachse der Drehmoment-Übertragungseinrichtung (1) an der Drehmoment- Übertragungseinrichtung angeordnet sind, wobei:

- mindestens eines der mindestens zwei ferromagnetischen Elemente (4) im Wesentlichen planar ausgebildet ist und in dem Betriebszustand im Wesentlichen parallel zu einer tangentialen Ebene der Oberfläche der Drehmoment-Übertragungseinrichtung (1) ausgerichtet ist; und/oder

- mindestens eines der mindestens zwei ferromagnetischen Elemente (4) als ein teilweise umlaufendes ferromagnetisches Element (4) ausgebildet ist und in dem Betriebszustand die Drehmoment-Übertragungseinrichtung (1) entlang einer umlaufenden Richtung bezüglich einer Drehachse der Drehmoment-Übertragungseinrichtung (1) zumindest teilweise umgibt

10. Sensorvorrichtung nach einem der Ansprüche 1 bis 9, wobei das mindestens eine ferromagnetische Element (4) eine magnetische Anisotropie aufweist; und/oder

wobei die Messeinrichtung ferner mindestens ein Magnetfeldelement (2) umfasst, wobei das mindestens eine Magnetfeldelement (2) ausgelegt ist, in dem Betriebszustand ein Magnetfeld zu erzeugen, um in dem mindestens einen ferromagnetischen Element (4) eine magnetische Anisotropie zu erzeugen oder zu beeinflussen.

11. Verfahren zur Bestimmung eines Drehmoments einer Drehmoment-Übertragungseinrichtung (1), umfassend:

Anordnen von mindestens einem ferromagnetischen Element (4) an der Drehmoment-Übertragungseinrichtung (1), wobei das mindestens eine ferromagnetische Element (4) mindestens eine ferromagnetische Schicht (4A) aufweist;

Messen einer ferromagnetischen Resonanzfrequenz des zumindest einen ferromagnetischen Elements (4) mittels einer Messeinrichtung, welche mindestens ein Messelement (3) umfasst, wobei jedes Messelement (3) ausgelegt ist, eine ferromagnetische Resonanzfrequenz zumindest eines ferromagnetischen Elements (4) zu messen, und wobei wobei mindestens ein Messelement (3) des mindestens einen Messelements (3) als Hochfrequenz-Triplate-Stripline ausgebildet ist; und

Bestimmen des Drehmoments der Drehmoment-Übertragungseinrichtung (1) basierend auf einer Verschiebung der gemessenen ferromagnetischen Resonanzfrequenz.

12. Verfahren nach Anspruch 11, wobei das Anordnen des mindestens einen ferromagnetischen Elements (4) ein Verkleben, Verschweißen, Verpressen, chemisches Reagieren und/oder Verrasten des mindestens einen ferromagnetischen Elements (4) mit der Drehmoment-Übertragungseinrichtung (1) umfasst, und, optional, wobei das Bestimmen des Drehmoments der Drehmoment-Übertragungseinrichtung (1) ein Berücksichtigen einer nicht perfekten Übertragung von mechanischer Spannung durch eine Verbindung von der Drehmoment-Übertragungseinrichtung (1) und des mindestens einen ferromagnetische Elements (4) umfasst, und, optional, wobei das Verfahren ferner ein Bestimmen der nicht perfekten Übertragung der mechanischen Spannung durch die Verbindung von der Drehmoment-Übertragungseinrichtung (1) und des mindestens einen ferromagnetische Elements (4) umfasst.

13. Verfahren nach einem der Ansprüche 11 bis 12, wobei das Verfahren ein Erzeugen der mindestens einen ferromagnetischen Schicht (4A) umfasst, und, optional, wobei das Erzeugen mindestens einer ferromagnetischen Schicht (4A) ferner mindestens umfasst:

ein Erzeugen einer ersten ferromagnetischen Schicht (41),
ein Erzeugen einer ersten isolierenden, nichtleitenden Trennschicht (40T) auf der ersten ferromagnetischen Schicht (41), und
ein Erzeugen einer zweiten ferromagnetischen Schicht (42) auf der ersten isolierenden, nichtleitenden Trennschicht (40T), und, optional,
wobei das Verfahren ferner ein Erzeugen eines Substrats (4C) und ein Erzeugen einer Zwischenschicht (4B) auf dem Substrat (4C) umfasst, wobei eine ferromagnetische Schicht (4A) der mindestens einen ferromagnetischen Schichten (4A) auf der Zwischenschicht (4B) erzeugt wird, wobei die Zwischenschicht (4B) ausgelegt ist, in einem Betriebszustand der Sensorvorrichtung die mindestens eine ferromagnetische Schicht (4A) und die Drehmoment-Übertragungseinrichtung (1) magnetisch zu entkoppeln.

14. Verfahren nach einem der Ansprüche 11 bis 13, wobei das Verfahren ferner umfasst:
Glühen des mindestens einen ferromagnetischen Elements (4) in einem externen statischen Magnetfeld zur Erzeugung einer magnetischen Anisotropie des mindestens einen ferromagnetischen Elements (4).

**Claims**

1. Sensor device, comprising:

   at least one ferromagnetic element (4) arrangeable on a torque transmission device in an operating state; and a measuring device comprising at least one measuring element (3), wherein each measuring element (3) is configured to measure a ferromagnetic resonance frequency of the at least one ferromagnetic element (4), wherein the measuring device is configured to determine a torque of the torque transmission device (1) based on a shift in the measured ferromagnetic resonance frequency, wherein the at least one ferromagnetic element (4) has at least one ferromagnetic layer (4A), and wherein at least one measuring element (3) of the at least one measuring elements (3) is formed as a high-frequency triplate stripline.

2. Sensor device according to claim 1, wherein the at least one ferromagnetic element (4) has at least a first ferromagnetic layer (41) and a second ferromagnetic layer, and
wherein the at least one ferromagnetic element (4) has at least one insulating, non-conductive separating layer (40T) arranged between the first ferromagnetic layer (41) and the second ferromagnetic layer (42) and configured to magnetically decouple the first ferromagnetic layer (41) and the second ferromagnetic layer (42) from one another.

3. Sensor device according to claim 1 or 2, wherein each of the at least one ferromagnetic layers (4A) has a thickness of at most approximately 500 $\mu$m, preferably at most approximately 1 $\mu$m and/or at least approximately 50 nm, preferably at least approximately 150 nm; and/or

   wherein the thickness of the respective at least one ferromagnetic layer (4A) and/or a thickness of the at least one ferromagnetic element (4) are substantially constant; and/or
   wherein the at least one ferromagnetic element (4) has at least one substrate (4C), which in the operating state is arranged between the at least one ferromagnetic layer (4A) and the torque transmission device (1).

4. Sensor device according to any one of claims 1 to 3, wherein the at least one ferromagnetic element (4) has at least one intermediate layer (4B), which in the operating state is arranged between the at least one ferromagnetic layer (4A) and the torque transmission device (1),

   wherein the at least one intermediate layer (4B) is configured to magnetically decouple the at least one ferromagnetic layer (4A) and the torque transmission device (1) in an operating state, and, optionally,
   wherein the at least one intermediate layer (4B) has a thickness of at most approximately 500 $\mu$m, preferably at most approximately 5 $\mu$m and/or at least approximately 200 nm, preferably approximately 750 nm.

5. Sensor device according to any one of claims 1 to 4, wherein the at least one ferromagnetic element (4) in the operating state is connectable to the torque transmission device (1) by gluing, welding, pressing, chemical reaction and/or latching in order to transmit a mechanical tension caused by the torque from the torque transmission device (1) to the at least one ferromagnetic element (4), and, optionally,
wherein the measuring device is configured to determine the torque of the torque transmission device (1) based on a shift in the measured ferromagnetic resonance frequency, wherein an imperfect transmission of the mechanical tension through the connection of the torque transmission device (1) and the at least one ferromagnetic element (4) is taken into account, and, optionally, wherein the measuring device is configured, in a calibration step, to determine an imperfect transmission of the mechanical tension through the connection of the torque transmission device (1) and the at least one ferromagnetic element (4).

6. Sensor device according to any one of the preceding claims, wherein at least one measuring element (3) is configured to measure or to determine the ferromagnetic resonance frequency of the at least one ferromagnetic element (4) using a frequency sweep; and/or

wherein, in the operating state, a smallest distance between at least one measuring element (3) and at least one ferromagnetic element (4) has a value of at most approximately 1500 $\mu$m, preferably at most approximately 500 $\mu$m, further preferably at most approximately 300 $\mu$m, most preferably at most approximately 150 $\mu$m; and/or wherein, during a measurement of the ferromagnetic resonance frequency of at least one ferromagnetic element (4), a measurement angle between a surface of the at least one measuring element (3) and the at least one ferromagnetic element (4) has a value of at least 0°, preferably at least approximately 12°, and at most 28°, preferably at most approximately 16°; and/or wherein the torque transmission device (1) is formed as a shaft.

7. Sensor device according to any one of claims 1 to 6,

wherein the high-frequency triplate stripline is configured to be operated in a reflection mode of an electromagnetic high-frequency wave guided in a defined manner, and, optionally, wherein the high-frequency triplate stripline is configured to receive or to measure at least one reflection signal in the reflection mode for measurement of the ferromagnetic resonance frequency, wherein the at least one reflection signal is determinable or measurable at a fixed measurement frequency.

8. Sensor device according to any one of claims 1 to 7, wherein the at least one measuring element (3) is arranged along a measurement plane in the operating state, wherein the measurement plane is formed substantially tangential to a surface of the torque transmission device (1); or wherein the at least one measuring element (3) in the operating state at least partially surrounds the torque transmission device (1) substantially along a circumferential direction with respect to a rotation axis of the torque transmission device (1).

9. Sensor device according to any one of claims 1 to 8, wherein the at least one ferromagnetic element (4) is formed as at least one circumferential ferromagnetic element (4), wherein the at least one circumferential ferromagnetic element (4) in the operating state substantially completely surrounds the torque transmission device (1) along a circumferential direction with respect to a rotation axis of the torque transmission device (1); or wherein the at least one ferromagnetic element (4) comprises at least two ferromagnetic elements (4), wherein the at least two ferromagnetic elements (4) are arranged on the torque transmission device in a circumferential direction with respect to a rotation axis of the torque transmission device (1), wherein:

- at least one of the at least two ferromagnetic elements (4) is formed substantially planar and, in the operating state, is oriented substantially parallel to a tangential plane of the surface of the torque transmission device (1); and/or
- at least one of the at least two ferromagnetic elements (4) is formed as a partially circumferential ferromagnetic element (4) and, in the operating state, at least partially surrounds the torque transmission device (1) along a circumferential direction with respect to a rotation axis of the torque transmission device (1).

10. Sensor device according to any one of claims 1 to 9, wherein the at least one ferromagnetic element (4) has a magnetic anisotropy; and/or wherein the measuring device further comprises at least one magnetic field element (2), wherein the at least one magnetic field element (2) is configured to generate a magnetic field in the operating state in order to generate or influence a magnetic anisotropy in the at least one ferromagnetic element (4).

11. Method for determining a torque of a torque transmission device (1), the method comprising:

arranging at least one ferromagnetic element (4) on the torque transmission device (1), wherein the at least one ferromagnetic element (4) has at least one ferromagnetic layer (4A); measuring a ferromagnetic resonance frequency of the at least one ferromagnetic element (4) by means of a measuring device comprising at least one measuring element (3), wherein each measuring element (3) is configured to measure a ferromagnetic resonance frequency of the at least one ferromagnetic element (4), and wherein at least one measuring element (3) of the at least one measuring elements (3) is formed as a high-frequency triplate stripline; and determining the torque of the torque transmission device (1) based on a shift in the measured ferromagnetic resonance frequency.

**12.** Method according to claim 11, wherein arranging the at least one ferromagnetic element (4) comprises gluing, welding, pressing, chemical reaction and/or latching of the at least one ferromagnetic element (4) to the torque transmission device (1), and, optionally,
wherein determining the torque of the torque transmission device (1) comprises taking into account an imperfect transmission of mechanical tension through a connection between the torque transmission device (1) and the at least one ferromagnetic element (4), and, optionally, wherein the method further comprises determining the imperfect transmission of the mechanical tension through the connection between the torque transmission device (1) and the at least one ferromagnetic element (4).

**13.** Method according to any one of claims 11 to 12, wherein the method comprises producing the at least one ferromagnetic layer (4A), and, optionally,
wherein producing at least one ferromagnetic layer (4A) further comprises at least:

producing a first ferromagnetic layer (41),
producing a first insulating, non-conductive separating layer (40T) on the first ferromagnetic layer (41), and
producing a second ferromagnetic layer (42) on the first insulating, non-conductive separating layer (40T), and, optionally,
wherein the method further comprises producing a substrate (4C) and producing an intermediate layer (4B) on the substrate (4C), wherein a ferromagnetic layer (4A) of the at least one ferromagnetic layers (4A) is produced on the intermediate layer (4B), wherein the intermediate layer (4B) is configured, in an operating state of the sensor device, to magnetically decouple the at least one ferromagnetic layer (4A) and the torque transmission device (1).

**14.** Method according to any one of claims 11 to 13, wherein the method further comprises:
annealing the at least one ferromagnetic element (4) in an external static magnetic field to generate a magnetic anisotropy of the at least one ferromagnetic element (4).

**Revendications**

**1.** Dispositif de capteur comprenant :

au moins un élément ferromagnétique (4), lequel peut être disposé, dans un état de fonctionnement, sur un système de transmission de couple de rotation (1), et
un système de mesure comprenant au moins un élément de mesure (3), dans lequel chaque élément de mesure (3) est conçu pour mesurer une fréquence de résonance ferromagnétique d'au moins un élément ferromagnétique (4),
dans lequel le système de mesure est conçu pour mesurer un couple de rotation du système de transmission de couple de rotation (1) sur la base d'un décalage de la fréquence de résonnance ferromagnétique mesurée,
dans lequel l'au moins un élément ferromagnétique (4) présente au moins une couche ferromagnétique (4A), et
dans lequel au moins un élément de mesure (3) de l'au moins un élément de mesure (3) est réalisé en tant que ligne à ruban triplaque à haute fréquence.

**2.** Dispositif de capteur selon la revendication 1, dans lequel l'au moins un élément ferromagnétique (4) présente au moins une première couche ferromagnétique (41) et une deuxième couche ferromagnétique (42), et
dans lequel l'au moins un élément ferromagnétique (4) présente au moins une couche de séparation (40T) non conductrice isolante, laquelle est disposée entre la première couche ferromagnétique (41) et la deuxième couche ferromagnétique (42), et est conçu pour découpler magnétiquement l'une de l'autre la première couche ferromagnétique (41) et la deuxième couche ferromagnétique (42).

**3.** Dispositif de capteur selon la revendication 1 ou 2, dans lequel chacune de l'au moins une couche ferromagnétique (4A) présente respectivement une épaisseur d'environ 500 $\mu$m au maximum, de manière préférée d'environ 1 $\mu$m au maximum et/ou d'environ 50 nm au minimum, de manière préférée d'environ 150 nm au minimum, et/ou

dans lequel l'épaisseur de l'au moins une couche ferromagnétique (4A) respective et/ou une épaisseur de l'au moins un élément ferromagnétique (4) sont sensiblement constantes ; et/ou
dans lequel l'au moins un élément ferromagnétique (4) présente au moins un substrat (4C), lequel est disposé dans l'état de fonctionnement entre l'au moins une couche ferromagnétique (4A) et le système de transmission de couple de rotation (1).

4. Dispositif de capteur selon l'une quelconque des revendications 1 à 3, dans lequel l'au moins un élément ferromagnétique (4) présente au moins une couche intermédiaire (4B), laquelle est disposée dans l'état de fonctionnement entre l'au moins une couche ferromagnétique (4A) et le système de transmission de couple de rotation (1),

dans lequel l'au moins une couche intermédiaire (4B) est conçue pour découpler magnétiquement, dans l'état de fonctionnement, l'au moins une couche ferromagnétique (4A) et le système de transmission de couple de rotation (1), et, en option,

dans lequel l'au moins une couche intermédiaire (4B) présente une épaisseur d'environ 500 $\mu$m au maximum, de manière préférée d'environ 5 $\mu$m au maximum et/ou d'environ 200 nm au minimum, de manière préférée d'environ 750 nm au minimum.

5. Dispositif de capteur selon l'une quelconque des revendications 1 à 4, dans lequel l'au moins un élément ferromagnétique (4) peut être assemblé dans l'état de fonctionnement au système de transmission de couple de rotation (1) par collage, soudage, compression, réaction chimique et/ou enclenchement pour transmettre une tension mécanique provoquée par le couple de rotation du système de transmission de couple de rotation (1) sur l'au moins un élément ferromagnétique (4), et, en option,

dans lequel le système de mesure est conçu pour définir le couple de rotation du système de transmission de couple de rotation (1) sur la base d'un décalage de la fréquence de résonance ferromagnétique mesurée, dans lequel une transmission non parfaite de la tension mécanique est prise en compte par l'assemblage du système de transmission de couple de rotation (1) et de l'au moins un élément ferromagnétique (4), et, en option, dans lequel le système de mesure est conçu pour définir, dans une étape d'étalonnage, la transmission non parfaite de la tension mécanique par l'assemblage du système de transmission de couple de rotation (1) et de l'au moins un élément ferromagnétique (4).

6. Dispositif de capteur selon l'une quelconque des revendications précédentes, dans lequel l'au moins un élément de mesure (3) est conçu pour mesurer ou déterminer la fréquence de résonance ferromagnétique de l'au moins un élément ferromagnétique (4) au moyen d'un balayage de fréquence ; et/ou

dans lequel, dans l'état de fonctionnement, une distance la plus petite entre au moins un élément de mesure (3) et au moins un élément ferromagnétique (4) présente une valeur d'environ 1500 $\mu$m au maximum, de manière préférée d'environ 500 $\mu$m au maximum, en outre de manière préférée d'environ 300 $\mu$m au maximum, idéalement d'environ 150 $\mu$m au maximum ; et/ou

dans lequel pendant une mesure de la fréquence de résonance ferromagnétique d'au moins un élément ferromagnétique (4), un angle de mesure entre une surface de l'au moins un élément de mesure (3) et de l'au moins un élément ferromagnétique (4) présente une valeur d'au moins environ 0°, de manière préférée d'au moins environ 12° et d'environ 28° au maximum, de manière préférée d'environ 16° au maximum ; et/ou

dans lequel le système de transmission de couple de rotation (1) est réalisé en tant qu'un arbre.

7. Dispositif de capteur selon l'une quelconque des revendications 1 à 6,

dans lequel la bande à ruban triplaque à haute fréquence est conçue pour fonctionner dans un mode de réflexion d'une onde à haute fréquence électromagnétique guidée de manière définie, et, en option

dans lequel la bande à ruban triplaque à haute fréquence est conçue pour recevoir ou pour mesurer au moins un signal de réflexion dans le mode de réflexion destiné à mesurer la fréquence de résonance ferromagnétique, dans lequel l'au moins un signal de réflexion peut être déterminé ou mesuré à une fréquence de mesure fixe.

8. Dispositif de capteur selon l'une quelconque des revendications 1 à 7, dans lequel l'au moins un élément de mesure (3) est disposé, dans l'état de fonctionnement, sensiblement le long d'un plan de mesure, dans lequel le plan de mesure est réalisé de manière sensiblement tangentielle par rapport à une surface du système de transmission de couple de rotation (1) ; ou

dans lequel l'au moins un élément de mesure (3) entoure au moins en partie le système de transmission de couple de rotation (1) dans l'état de fonctionnement sensiblement le long d'une direction périphérique par rapport à un axe de rotation du système de transmission de couple de rotation (1).

9. Dispositif de capteur selon l'une quelconque des revendications 1 à 8, dans lequel l'au moins un élément ferromagnétique (4) est réalisé en tant qu'au moins un élément ferromagnétique (4) périphérique, dans lequel l'au moins un élément ferromagnétique (4) périphérique entoure sensiblement totalement dans l'état de fonctionnement le système de transmission de couple de rotation (1) le long d'une direction périphérique par rapport à un axe de rotation du système de transmission de couple de rotation (1) ; ou

dans lequel l'au moins un élément ferromagnétique (4) comprend au moins deux éléments ferromagnétiques (4), dans lequel les au moins deux éléments ferromagnétiques (4) sont disposés sur le système de transmission de couple de rotation dans une direction périphérique par rapport à un axe de rotation du système de transmission de couple de rotation (1), dans lequel :

- au moins un des au moins deux éléments ferromagnétiques (4) est réalisé de manière sensiblement planaire et est orienté, dans l'état de fonctionnement, sensiblement de manière parallèle par rapport à un plan tangentiel de la surface du système de transmission de couple de rotation (1) ; et/ou
- au moins un des au moins deux éléments ferromagnétiques (4), qui est réalisé en tant qu'un élément ferromagnétique (4) en partie périphérique et entoure au moins en partie, dans l'état de fonctionnement, le système de transmission de couple de rotation (1) le long d'une direction périphérique par rapport à un axe de rotation du système de transmission de couple de rotation (1).

**10.** Dispositif de capteur selon l'une quelconque des revendications 1 à 9, dans lequel l'au moins un élément ferromagnétique (4) présente une anisotropie magnétique ; et/ou

dans lequel le système de mesure comprend en outre au moins un élément de champ magnétique (2), dans lequel l'au moins un élément de champ magnétique (2) est conçu pour générer, dans l'état de fonctionnement, un champ magnétique pour produire ou influencer une anisotropie magnétique dans l'au moins un élément ferromagnétique (4).

**11.** Procédé de définition d'un couple de rotation d'un système de transmission de couple de rotation (1), comprenant :

la disposition d'au moins un élément ferromagnétique (4) sur le système de transmission de couple de rotation (1), dans lequel l'au moins un élément ferromagnétique (4) présente au moins une couche ferromagnétique (4A) ;
la mesure d'une fréquence de résonance ferromagnétique de l'au moins un élément ferromagnétique (4) au moyen d'un système de mesure, lequel comprend au moins un élément de mesure (3), dans lequel chaque élément de mesure (3) est conçu pour mesurer une fréquence de résonance ferromagnétique d'au moins un élément ferromagnétique (4), et dans lequel au moins un élément de mesure (3) de l'au moins un élément de mesure (3) est réalisé en tant que bande à ruban triplaque à haute fréquence ; et
la définition du couple de rotation du système de transmission de couple de rotation (1) sur la base d'un décalage de la fréquence de résonance ferromagnétique mesurée.

**12.** Procédé selon la revendication 11, dans lequel la disposition de l'au moins un élément ferromagnétique (4) comprend un collage, un soudage, une compression, une réaction chimique et/ou un enclenchement de l'au moins un élément ferromagnétique (4) au système de transmission de couple de rotation (1), et, en option, dans lequel la définition du couple de rotation du système de transmission de couple de rotation (1) comprend une prise en compte d'une transmission non parfaite d'une tension mécanique par un assemblage du système de transmission de couple de rotation (1) et de l'au moins un élément ferromagnétique (4), et, en option, dans lequel le procédé comprend en outre une définition de la transmission non parfaite de la tension mécanique par l'assemblage du système de transmission de couple de rotation (1) et de l'au moins un élément ferromagnétique (4).

**13.** Procédé selon l'une quelconque des revendications 11 à 12, dans lequel le procédé comprend une production de l'au moins une couche ferromagnétique (4A), et, en option, dans lequel la production d'au moins une couche ferromagnétique (4A) comprend en outre au moins :

une production d'une première couche ferromagnétique (41),
une production d'une première couche de séparation (40T) non conductrice isolante sur la première couche ferromagnétique (41), et
une production d'une deuxième couche ferromagnétique (42) sur la première couche de séparation (40T) non conductrice isolante, et, en option,
dans lequel le procédé comprend en outre une production d'un substrat (4C) et une production d'une couche intermédiaire (4B) sur le substrat (4C), dans lequel une coche ferromagnétique (4A) des au moins une couches ferromagnétiques (4A) est produite sur la couche intermédiaire (4B), dans lequel la couche intermédiaire (4B) est conçue pour découpler magnétiquement, dans un état de fonctionnement du dispositif de capteur, l'au moins une couche ferromagnétique (4A) et le système de transmission de couple de rotation (1).

**14.** Procédé selon l'une quelconque des revendications 11 à 13, dans lequel le procédé comprend en outre :
le recuit de l'au moins un élément ferromagnétique (4) dans un champ magnétique statique externe pour produire une anisotropie magnétique de l'au moins un élément ferromagnétique (4).

Figur 1

Figur 2

Figur 3

Figur 4

Figur 5

Figur 6

Figur 7

Figur 8

Figur 9

Figur 10

Figur 11

Figur 12

Figur 13A

Figur 13B

Figur 14A

Figur 14B

Figur 15

Figur 16

# Figur 17

Figur 18A

Figur 18B

Figur 18C

Figur 18D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014159710 A1
- WO 2016162028 A1
- FR 2700846 A1
- WO 2013147268 A1
- US 2007034022 A1

**In der Beschreibung aufgeführte Nicht-Patentliteratur**

- **BERTHOLD et al.** Non-contact strain measurements based on inverse magnetostriction. *Sensors and Actuators A,* 2010, vol. 158, 224-230
- **INHALTE VON BERTHOLD et al.** Non-contact strain measurements based on inverse magnetostriction. *Sensors and Actuators A,* 2010, vol. 158, 224-230
- **KATHRIN KRÜGER et al.** High-frequency magnetoelastic measurements of Fe-Co-Hf-N/Ti-N multiplayer coatings. *JOURNAL OF MAGNETISM AND MAGNETIC MATERIALS,* 31. Oktober 2013, vol. 343, 42-48